# EUROPÄISCHE PATENTSCHRIFT

(11) **EP 2 704 293 B1**
(45) Veröffentlichungstag und Bekanntmachung des Hinweises auf die Patenterteilung: **13.12.2017**
(21) Anmeldenummer: 12182710.9
(22) Anmeldetag: 03.09.2012
(51) Int. Cl.: H02K 1/27, H02K 15/03

(54) **Elektrische Maschine mit einem Grundelement**
Electric machine with a base element
Machine électrique avec élément de base

(43) Veröffentlichungstag der Anmeldung: 05.03.2014
(73) Patentinhaber: Siemens Aktiengesellschaft, 80333 München (DE)
(72) Erfinder: Dorfner, Matthias, 84375 Kirchdorf am Inn (DE); Jajtic, Zeljko, 80992 München (DE); Matscheko, Gerhard, 82319 Starnberg (DE)

(56) Entgegenhaltungen:
- EP-A1- 2 484 464
- DE-A1- 19 914 021
- DE-A1-102006 043 893
- JP-A- 59 059 057
- US-A- 4 445 062
- Duane C Hanselman: "Brushless permanent magnet motor design", , 1 January 2003 (2003-01-01), XP055140659, Cranston, R.I ISBN: 978-1-93-213363-9 Retrieved from the Internet: URL:http://libris.kb.se/resource/bib/89542 83 [retrieved on 2014-09-16]

## Beschreibung

Die Erfindung betrifft eine elektrische Maschine gemäß dem Oberbegriff des Anspruchs 1, ein Sekundärteil für eine elektrische Maschine, sowie eine Werkzeugmaschine. Des Weiteren betrifft die Erfindung ein Verfahren zur Herstellung eines Grundelements für eine elektrische Maschine, ein Verfahren zur Herstellung eines Sekundärteils für eine elektrische Maschine, und die Verwendung eines magnetisch aktiven Stoffs für eine elektrische Maschine.

Eine elektrische Maschine wird zur Energieumwandlung zwischen elektrischer und mechanischer Energie eingesetzt.

Eine elektrische Maschine muss dabei in stark unterschiedlichen Betriebssituationen Kräfte aufbringen oder Kräfte aufnehmen, um die an sie gestellten Anforderungen zu erfüllen. Die auftretenden Betriebssituationen können von einem Stillstand einer elektrischen Maschine bis zu einer Bewegung mit sehr hoher Geschwindigkeit reichen.

Eine Betriebssituation des Stillstands kann z.B. bei einer elektrischen Maschine dann vermehrt auftreten, wenn die elektrische Maschine Positionieraufgaben erfüllen muss. Bei solchen Aufgaben muss die elektrische Maschine sehr hohe Kräfte aufbringen, um eine bestimmte Position zu halten.

Eine Betriebssituation mit sehr hoher Geschwindigkeit kann z.B. auftreten, wenn ein schneller Wechsel von einer ersten Position in eine zweite Position erfolgen soll.

Ein weiteres Beispiel für eine Betriebssituation, in der eine hohe Geschwindigkeit gefordert sein kann, ist auch eine gleichförmige Bewegung über einen langen Zeitraum.

Um den Platzbedarf für eine elektrische Maschine gering zu halten, wird das Getriebe möglichst klein ausgeführt oder es wird darauf verzichtet.

Somit werden an die Leistungsfähigkeit einer elektrischen Maschine sehr hohe Anforderungen gestellt.

Aus der JP 59 0959057 A ist ein Rotor für eine elektrische Maschine bekannt, bei dem die Permanentmagnete des Rotors am Innenumfang mit einem Hohlzylinder integriert sind. Die Permanentmagnete und die Joche des Rotors sind durch formschlüssige Verbindungsmittel gegeneinander gesichert, wobei zwischen den Permanentmagneten je ein Joch vorhanden ist. Um einen Montage der elektrischen Maschine zu erleichtern und die Anzahl der Teile zu reduzieren, werden die Permanentmagnete und die Joche integral geformt.

Die EP 2 484 464 A1 beschäftigt sich mit dem Formen von Pulvern, um das Verhältnis der magnetischen Phase zu erhöhen und ein magnetisches Element, das als Rohmaterial für einen Magnetkörper, wie einen Seltene-Erde-Magnet, geeignet ist ohne sintern herzustellen. Seltene-Erden-Magnete werden häufig als Permanentmagnete in Motoren und Energieerzeugern verwendet. Das magnetische Element kann vorzugsweise als Rohmaterial für in verschiedenen Motoren verwendeten Permanentmagneten genutzt werden, insbesondere Hochgeschwindigkeitsmotaren, die für hybrid elektrische Fahrzeuge (HEV) und Festplattenantriebe (HDD) bereitgestellt werden. Jeder Partikel des Pulvers kann an seiner Peripherie eine isolierende Beschichtung aus einem isolierenden Material aufweisen, um wirbelstromverluste beispielsweise bei Verwendung des magnetischen Elementes als Ausgangsmaterial für einen Motormagneten zu verringern.

Aus der DE 10 2006 043893 A1 ist eine elektrische Maschine umfassend ein Primärteil und ein Sekundärteil bekannt, das einen Polzahn aufweist, wobei der Polzahn zwei Polzahnhälften aufweist, die zwei gegenüberliegende Stirnseiten aufweisen. Mindestens ein Stirnseitenblech verbindet je eine Stirnseite der beiden Polzahnhälften so miteinander, dass zwischen den beiden Polzahnhälften eine Aussparung ausgebildet ist, in der Magnetpulver verpresst ist.

Der Erfindung liegt daher die Aufgabe zugrunde, die Leistungsfähigkeit einer elektrischen Maschine zu verbessern.

Diese Aufgabe wird durch eine elektrische Maschine mit den Merkmalen des Anspruchs 1 gelöst.

Diese Aufgabe wird auch durch ein Grundelement mit den Merkmalen nach Anspruch 9 gelöst.

Die Aufgabe wird auch durch ein Sekundärteil nach Anspruch 10 gelöst.

Ferner wird die Aufgabe durch eine Werkzeugmaschine nach Anspruch 11 gelöst.

Außerdem wird die Aufgabe durch ein Verfahren zur Herstellung eines Grundelements nach Anspruch 12 gelöst.

Die Aufgabe wird auch durch ein Verfahren zur Herstellung eines Sekundärteils nach Anspruch 13 gelöst.

Weiterhin wird die Aufgabe durch die Verwendung eines magnetisch aktiven Stoffs nach Anspruch 14 gelöst.

Die erfindungsgemäße elektrische Maschine löst die Aufgabe, indem zwischen dem ersten und dem zweiten Polschuh der Permanentmagnet angeordnet ist, der die Matrix aufweist, in der der magnetisch aktive Stoff eingebettet ist. Der durch den magnetisch aktiven Stoff vorteilhaft erzeugte magnetische Fluss wird in hohem Maße am zweiten Ende des ersten und des zweiten Polschuhs zur Verfügung gestellt. So wird eine hohe Leistungsfähigkeit der elektrischen Maschine erreicht. Ein Grund dafür, dass die Erzeugung des magnetischen Flusses durch den in der Matrix eingebetteten magnetisch aktiven Stoff vorteilhaft ist, besteht in einer geringeren bleibenden Veränderung der Magnetisierung des Permanentmagneten durch dessen geringeren Erwärmung in einer Betriebssituation, in der die elektrische Maschine eine Bewegung mit hoher Geschwindigkeit über einen längeren Zeitraum bewirkt.

Indem der Permanentmagnet einen ersten Polschuh des Grundelements und einen zweiten Polschuh des Grundelements voneinander trennt, wobei der erste Polschuh den ersten Bereich mit weichmagnetischen Eigenschaften und einer magnetischen Permeabilitätszahl µᵣ > 2 aufweist und der zweite Polschuh den zweiten Bereich mit weichmagnetischen Eigenschaften und einer magnetischen Permeabilitätszahl µᵣ > 2 aufweist, wird der durch den magnetisch aktiven Stoff erzeugte magnetische Fluss in hohem Maße am zweiten Ende des ersten und des zweiten Polschuhs zur Verfügung gestellt. Es wird damit die Leistungsfähigkeit einer erfindungsgemäßen elektrischen Maschine verbessert. Die magnetische Permeabilitätszahl µᵣ weist bei Ferriten einen Wert von 4 bis 15.000 und bei ferromagnetischen Stoffen einen Wert von 300 bis 600.000 auf.

Das zweite Ende des ersten und zweiten Polschuhs können mit einem Material verbunden sein, das eine magnetische Permeabilitätszahl µᵣ < 2, insbesondere µᵣ ≈ 1, aufweist. Dies ermöglicht vorteilhaft eine Reduzierung des Streuflusses am zweiten Ende des ersten und des zweiten Polschuhs. Vorteilhaft verbindet das Material mit der magnetischen Permeabilitätszahl µᵣ < 2, insbesondere µᵣ ≈ 1, den ersten Polschuh mit dem zweiten Polschuh bereits vor dem Einlegen in das Werkzeug. Dies trägt zu einer definierten Lage des ersten und des zweiten Polschuhs im Werkzeug bei, was die Leistungsfähigkeit der erfindungsgemäßen elektrischen Maschine verbessert.

Der Permanentmagnet kann weitere erste Bereich des Grundelements und weitere zweite Bereich des Grundelements voneinander trennen, wobei der erste Polschuh die weiteren ersten Bereiche mit weichmagnetischen Eigenschaften und einer magnetischen Permeabilitätszahl µᵣ > 2 aufweist und der zweite Polschuh die weiteren zweiten Bereich mit weichmagnetischen Eigenschaften und einer magnetischen Permeabilitätszahl µᵣ > 2 aufweist. Dies ermöglicht den ersten Bereich und die weiteren ersten Bereich bzw. den zweiten Bereich und die weiteren zweiten Bereiche durch eine isolierende Schicht elektrisch mit einem hohen Widerstand zu trennen, was zu einer Reduzierung von Wirbelströmen zwischen den Bereichen im Betrieb der erfindungsgemäßen elektrischen Maschine führt. Die Leistungsfähigkeit einer erfindungsgemäßen elektrischen Maschine kann so verbessert werden.

Der erste und der zweite Polschuh können durch ferromagnetische Bleche, insbesondere Elektrobleche, gebildet sein, die geschichtet sind. Die ferromagnetischen Bleche, insbesondere Elektrobleche, können mit einer isolierenden Schicht versehen sein, was zu einer Reduzierung der Wirbelströme führt. Die Leistungsfähigkeit einer erfindungsgemäßen elektrischen Maschine kann so verbessert werden. Die ferromagnetischen Bleche, insbesondere die Elektrobleche, des ersten Polschuhs können hier den ersten Bereich und die weiteren ersten Bereiche bilden. Die ferromagnetischen Bleche, insbesondere die Elektrobleche, des zweiten Polschuhs können hier den zweiten Bereich und die weiteren zweiten Bereiche bilden.

Das Sekundärteil, insbesondere ein Träger, den das Sekundärteil zur Befestigung eines Grundelements am Sekundärteil aufweist, kann aus einem mechanisch festen Material sein, das eine magnetische Permeabilitätszahl µᵣ < 2, insbesondere µᵣ ≈ 1, hat, wie z.B. ein austenitischer Edelstahl, Aluminium oder ein Faserverbundwerkstoff. Dies ermöglicht vorteilhaft eine Reduzierung des Streuflusses im Sekundärteil, insbesondere in dem Träger. Der Träger aus dem mechanisch festen Material verbindet das Grundelement mechanisch fest mit dem Sekundärteil. Hierdurch wird die Leistungsfähigkeit einer erfindungsgemäßen elektrischen Maschine ermöglicht, da das Grundelement am Sekundärteil auch im Betrieb der elektrischen Maschine in einer definierten Position relativ zum Sekundärteil gehalten wird.

Indem bei einer erfindungsgemäßen elektrischen Maschine mindestens ein zweites Grundelement, das einen weiteren ersten Polschuh, einen weiteren zweiten Polschuh und einen weiteren Permanentmagneten umfasst, am Sekundärteil befestigt ist, wobei der weitere erste Polschuh sich entlang des zweiten Polschuhs von dem ersten Ende des zweiten Polschuhs zum zweiten Ende des zweiten Polschuhs erstreckt, wobei der weitere Permanentmagnet eine vom weiteren zweiten Polschuh zum weiteren ersten Polschuh verlaufende Magnetisierung aufweist, wird vorteilhaft der magnetische Fluss, der durch den Permanentmagneten und den weiteren Permanentmagneten erzeugt ist, in einem hohen Maße verbessert an dem zweiten Ende des zweiten Polschuhs und dem zweiten Ende des weiteren ersten Polschuhs zur Verfügung gestellt. So wird die Leistungsfähigkeit einer erfindungsgemäßen elektrischen Maschine verbessert.

Eine erfindungsgemäße elektrische Maschine kann weitere Grundelemente aufweisen, die am Sekundärteil befestigt sind, und sich mit dem Grundelement und dem zweiten Grundelement aneinandergereiht entlang des Sekundärteils erstrecken. So wird ein Raum entlang des Sekundärteils in hohem Maße genutzt, um magnetische Flüsse zu erzeugen und diese in hohem Maße an den zweiten Enden der Polschuhe des Grundelements, des zweiten Grundelements und der weitere Grundelemente zur Verfügung zu stellen. So wird die Leistungsfähigkeit einer erfindungsgemäßen elektrischen Maschine verbessert.

In einem erfindungsgemäßen Verfahren zur Herstellung eines Grundelements werden die Abweichungen der mit dem erfindungsgemäßen Verfahren hergestellten Grundelemente durch das Verfahren, insbesondere durch die Abmessungen des Werkzeugs bestimmt. Insbesondere werden die Abweichungen der Grundelemente nicht durch Abweichungen von Abmessungen der ersten Polschuhe und/oder der zweiten Polschuhe, insbesondere Abweichungen von Abmessungen der ersten Polschuhe und/oder der zweiten Polschuhe in den zweiten Richtungen, beeinflusst. Die Grundelemente, die am Sekundärteil befestigt sind, können in den zweiten Richtungen eine Abweichung aufweisen, die durch das Verfahren zur Herstellung eines erfindungsgemäßen Grundelements und dem Werkzeug festgelegt sind.
Das Erzeugen des Permanentmagnets zwischen dem ersten und dem zweiten Polschuh in einem Werkzeug ermöglicht eine äußerst genaue Herstellung des Grundelements, insbesondere in Bezug auf seine Abmessungen in den zweiten Richtungen. So wird die Leistungsfähigkeit einer erfindungsgemäßen elektrischen Maschine verbessert. Die Abweichung der Grundelemente voneinander, insbesondere in den zweiten Richtungen, kann so geringer als 0,6 mm sein.

Die Grundelemente können entlang des Sekundärteils so angeordnet sein, dass zwischen einem Polschuh eines ersten der Grundelemente und einem Polschuh eines zweiten der Grundelemente sich ein Spalt erstreckt, der kleiner als 0,6 mm ist. Dies ist durch die sehr genaue Herstellung der erfindungsgemäßen Grundelemente möglich. So wird die Leistungsfähigkeit einer erfindungsgemäßen elektrischen Maschine verbessert.

Das Sekundärteil kann einen Träger zur Befestigung des Grundelements am Sekundärteil aufweisen, wobei die Grundelemente einem Raum zwischen Träger und Luftspalt ausfüllen. Der Raum wird insbesondere durch die herstellungsbedingte enge Verbindung zwischen Permanentmagnete und Polschuhe vorteilhaft ausgefüllt. So wird der Raum zwischen Träger und Luftspalt komplett für die Leistungsfähigkeit einer erfindungsgemäßen elektrischen Maschine genutzt.

Die erfindungsgemäße Maschine kann vorteilhaft in einer kostenoptimalen Serienproduktion hergestellt werden.

Vorteilhaft können für die erfindungsgemäße elektrische Maschine kostengünstigere Stoffe verwendet werden.

Magnetisch aktive Stoffe sind Stoffe, die ferromagnetisch oder ferromagnetisch sind.

Im Betrieb der elektrischen Maschine bewegt sich das Primärteil relativ zum Sekundärteil oder das Sekundärteil bewegt sich relativ zum Primärteil, oder Primär- und Sekundärteil werden in einer bestimmten Position gehalten, um Kraft bereitzustellen. Im Betrieb der elektrischen Maschine kann das Sekundärteil über den Luftspalt mit dem Primärteil zusammenwirken, indem das Primärteil wenigstens eine Wicklung aufweist, in der ein elektrischer Strom fließen kann.

Erste Richtungen des Grundelements sind dadurch definiert, dass diese ausgehend vom ersten Ende des ersten oder zweiten Polschuhs zum zweiten Ende des ersten oder zweiten Polschuhs verlaufen. Zweite Richtungen des Grundelements sind dadurch definiert, dass sie ausgehend vom ersten Polschuh durch den Permanentmagneten zum zweiten Polschuh verlaufen.

Vorteilhaft kann die Matrix einen Stoff aufweisen, der elektrisch isolierend ist, um eine geringere Erwärmung des Permanentmagneten durch wirbelströme im Permanentmagneten in einer Betriebsituation zu erreichen, in der die elektrische Maschine eine Bewegung mit hoher Geschwindigkeit über einen längeren Zeitraum bewirkt. Elektrisch isolierende Stoffe haben einen Leitwert, der typischerweise kleiner als 10⁻⁸s/m, sein kann. Der elektrisch isolierende Stoff kann z.B. ein Kunststoff sein.

Der magnetisch aktive Stoff kann eine Anisotropie aufweisen. Die Anisotropie kann eine intrinsische Anisotropie oder eine kristalline Anisotropie sein. Die Anisotropie wird vorteilhaft verwendet, um das Erzeugen und das zur Verfügung stellen des magnetischen Flusses in hohem Maße am zweiten Ende des ersten und des zweiten Polschuhs zu verbessern.

Die Matrix kann vor und während einer Herstellung eines Grundelements in einer anderen Form vorliegen. So kann die Matrix vor und teilweise während der Herstellung pulverförmig, körnig oder in einem viskosem Zustand sein und durch einen oder mehrere Herstellungsschritt in eine feste Form gebracht werden. So ist eine einfache Verarbeitung vor und während der Herstellung des Grundelements möglich. Insbesondere bildet sich in dem einen oder den mehreren Herstellungsschritten eine Struktur der Matrix aus, die zu der festen Form führt.

Ein erfindungsgemäßes Grundelement weist neben den bereits angeführten Vorteilen auch den weiteren Vorteil auf, dass es aufgrund seiner einfachen Struktur mit hoher Präzision gefertigt werden kann. Es wird so eine Verbesserung der Leistungsfähigkeit der elektrischen Maschine, die das Grundelement aufweist, erreicht.

Ein erfindungsgemäßes Sekundärteil weist auch den weiteren Vorteil auf, dass das Grundelement am Sekundärteil befestigt ist. So kann das Sekundärteil hohe Kräfte aufnehmen, die im Betrieb der elektrischen Maschine auf das Grundelement wirken. So wird die Leistungsfähigkeit des Sekundärteils und damit der elektrischen Maschine verbessert.

Eine erfindungsgemäße Werkzeugmaschine weist auch den weiteren Vorteil auf, dass die Werkzeugmaschine eine erfindungsgemäße elektrische Maschine umfasst, die ein Werkstück für eine Fräsbearbeitung in einer Position halten kann und die das Werkstück für eine Drehbearbeitung in eine kontinuierliche Rotation um eine Drehachse bringen kann. Das Werkstück kann vorteilhaft über ein Befestigungselement mit dem Sekundärteil drehfest verbunden sein, so dass in einem Betrieb der elektrischen Maschine bei einer kontinuierlichen Rotation des Sekundärteils um die Drehachse mit einer bestimmten Drehzahl auch bei dem Werkstück eine kontinuierliche Rotation um die Drehachse mit der bestimmten Drehzahl gegeben ist. Vorteilhaft kann so mit ein und derselben erfindungsgemäßen Maschine und mit ein und demselben Befestigungsmittel das Werkstück für die Fräsbearbeitung mit einer hohen Kraft in einer Position gehalten werden und für die Drehbearbeitung eine kontinuierlichen Drehbewegung mit hoher Drehzahl erzeugt werden. Weiterhin vorteilhaft ist hierfür kein Getriebe notwendig. Vorteilhaft kann an dem Werkstück über einen längeren Zeitraum eine Drehbearbeitung mit hoher Drehzahl durchgeführt werde ohne das eine Erwärmung eines Permanentmagneten einer erfindungsgemäßen elektrischen Maschine zu einer irreversiblen Schwächung der Magnetisierung der Permanentmagneten zumindest lokal führt, was eine Verschlechterung der Leistungsfähigkeit einer elektrischen Maschine bewirken kann.

Ein erfindungsgemäßes Verfahren zur Herstellung eines Grundelements für eine erfindungsgemäße elektrische Maschine weist auch den weiteren Vorteil auf, dass die Erzeugung des Permanentmagnets zwischen dem ersten und dem zweiten Polschuh auf das Grundelement beschränkt ist. Dadurch kann eine Vorrichtung zur Herstellung des Grundelements vorteilhaft kleiner ausgeführt sein, so dass das Verfahren zur Herstellung des Grundelements sehr genau durchgeführt werden kann. Es wird so die Leistungsfähigkeit des Grundelements bzw. der elektrischen Maschine verbessert.

Ein erfindungsgemäßes Verfahren zur Herstellung eines Sekundärteils für eine erfindungsgemäße elektrische Maschine weist auch den weiteren Vorteil auf, dass der erste Polschuh, der zweite Polschuh und der Permanentmagnet als eine Einheit am Sekundärteil befestigt werden. Das Verfahren zur Herstellung des Sekundärteils ermöglicht so eine Verbesserung der Leistungsfähigkeit des Sekundärteils bzw. der elektrischen Maschine.

Eine erfindungsgemäße Verwendung eines magnetisch aktiven Stoffs für eine erfindungsgemäße elektrische Maschine weist den weiteren Vorteil auf, dass die magnetischen Eigenschaften des magnetisch aktiven Stoffs in höherem Maße für die elektrische Maschine genutzt werden, und so die Leistungsfähigkeit der elektrischen Maschine verbessert werden.

Vorteilhafte Ausgestaltungen der Erfindung sind in den abhängigen Ansprüchen angegeben.

So ist eine Ausgestaltung der erfindungsgemäßen elektrischen Maschine vorteilhaft, bei der der räumliche Anteil des magnetisch aktiven Stoffes größer ist als der räumliche Anteil der Matrix. Durch den größeren räumlichen Anteil des magnetisch aktiven Stoffes, der in der Matrix eingebettet ist, wird ein hoher magnetischer Fluss erreicht, und so die Leistungsfähigkeit der erfindungsgemäßen elektrischen Maschine verbessert.

Der magnetisch aktive Stoff kann homogen in der Matrix verteilt sein, um einen homogenen magnetischen Fluss zu erreichen. Hierzu kann bei einem erfindungsgemäßen Verfahren zur Herstellung eines Grundelements für eine erfindungsgemäße elektrische Maschine der magnetisch aktive Stoff homogen in der Matrix verteilt zusammen mit der Matrix in ein Werkzeug eingefüllt werden. Da die homogene Anordnung des magnetisch aktiven Stoffes in der Matrix vor dem Einfüllen in das Werkzeug präziser herstellbar ist, wird so ein homogenerer magnetischer Fluss erreicht.

Der Permanentmagnet kann den magnetisch aktiven Stoff mit einem räumlichen Anteil von 60 bis 80% aufweisen. In diesem Bereich wird die Leistungsfähigkeit der erfindungsgemäßen elektrischen Maschine vorteilhaft verbessert. Unter anderem wird in diesem Bereich ein hoher räumlicher Anteil des magnetisch aktiven Stoffes erreicht ohne dessen Eigenschaften bei einer Herstellung des Permanentmagneten merklich zu verschlechtern.

In einer weiteren vorteilhaften Ausgestaltung einer erfindungsgemäßen elektrischen Maschine ist der Permanentmagnet durch Komprimieren der Matrix mit dem magnetisch aktiven Stoff erzeugt. Durch starkes Komprimieren der Matrix mit dem magnetisch aktiven Stoff wird eine hohe Remanenz erreicht. Die Matrix mit dem magnetisch aktiven Stoff wird so komprimiert, dass eine derartige Erhöhung des magnetischen Flusses erreicht wird, dass der Permanentmagnet eine hohe Remanenz aufweist.

Das Komprimieren kann z.B. durch Formpressen (compression molding) erfolgen.

Der Permanentmagnet kann durch Komprimieren der Matrix mit dem magnetisch aktiven Stoff aus einem Volumen, das die Matrix und den magnetisch aktiven Stoff aufweist, erzeugt worden sein, wobei das Volumen um den Faktor 1,3 bis 2 größer ist als ein Volumen, das durch den Permanentmagneten gebildet ist. Durch Komprimieren der Matrix mit dem magnetisch aktiven Stoff um den oben genannten Faktor wird vorteilhaft eine hohe Remanenz aber auch eine hohe Koerzitivfeldstärke bei Permanentmagneten erreicht.

Bei einem erfindungsgemäßen Verfahren zur Herstellung eines erfindungsgemäßen Grundelements kann das Komprimieren in einer dritten Richtung erfolgen, die transversal, insbesondere senkrecht, zu den ersten und zweiten Richtungen des Grundelements verläuft. Da eine erfindungsgemäße elektrische Maschine erfindungsgemäße Grundelemente aufweist, die in der Regel in der dritten Richtung geringe Änderungen in einer Gestalt des ersten bzw. des zweiten Polschuhs aufweisen, kann durch einen Stempel eine gleichmäßige Komprimierung der Matrix mit dem magnetisch aktiven Stoff erreicht werden. So kann eine bessere homogene Verteilung des magnetisch aktiven Stoffes in der Matrix erreicht werden.

Bei einem Verfahren zur Herstellung eines erfindungsgemäßen Grundelements können der erste und der zweite Polschuh in ein Werkzeug eingelegt werden, so dass zwischen dem ersten und den zweiten Polschuh eine Kavität gebildet ist. Anschließend können die Matrix und der magnetisch aktive Stoff in die Kavität hineinkomprimiert werden. Der erste und zweite Polschuh können das Werkzeug vorteilhaft vor der Matrix und dem magnetisch aktiven Stoff schützen. Während des Komprimierens der Matrix mit dem magnetisch aktiven Stoff wird das Werkzeug auf einer erhöhten Temperatur gehalten, um das Komprimieren zu erleichtern.

Das Verfahren zur Herstellung eines erfindungsgemäßen Grundelements kann vorteilhaft folgende Schritte aufweisen:
- Die Matrix wird pulverförmig, körnig oder im viskosen Zustand mit dem magnetisch aktiven Stoff in das Werkzeug eingefüllt, wobei sich der der erste und der zweite Polschuh im Werkzeug befinden.
- Die Matrix wird mit dem magnetisch aktiven Stoff in dem Werkzeug um den Faktor 1,3 bis 2 komprimiert, wobei das Werkzeug eine Temperatur aufweist, die in einem Bearbeitungsbereich liegt.
- Es wird an dem Werkzeug ein externes Magnetfeld erzeugt, das vom ersten zum zweiten Polschuh gerichtet ist.
- Nach Verstreichen eines bestimmten Zeitraums nach dem Anlegen des externen Magnetfelds wird die Temperatur des Werkzeugs erniedrigt, so dass die Temperatur unterhalb des Bearbeitungsbereiches liegt.
- Nach dem Abkühlen des Werkzeugs auf eine Resttemperatur wird das externe Magnetfeld abgeschaltet.

Die Matrix und der magnetisch aktive Stoff können vor dem Einfüllen in das Werkzeug auf eine Einfülltemperatur innerhalb eines Temperaturbereichs erwärmt werden, in dem die Matrix einen viskosen Zustand aufweist. Der viskose Zustand der Matrix ist dadurch gekennzeichnet, dass diese fließfähig ist. Der magnetisch aktive Stoff kann vorteilhaft einen magnetisch aktiven Teil aufweisen, der bei der Einfülltemperatur nur in geringem Maße komprimiert werden kann.

Wenn die Matrix pulverförmig in das Werkzeug eingefüllt wird, kann auf eine Erwärmung der Matrix vor dem Einfüllen in das Werkzeug verzichtet werden oder es genügt eine geringe Erwärmung auf eine Temperatur unterhalb des Bearbeitungsbereichs.

Das Komprimieren um den Faktor 1,3 bis 2 kann durch einen Druck im Bereich von 5 bis 11 t/cm² vorteilhaft für eine erfindungsgemäße elektrische Maschine erreicht werden.

Das Werkzeug wird mindestens auf eine Temperatur, die im Bearbeitungsbereich liegt, erwärmt und auf diese Temperatur gehalten, wenn die Matrix den ersten und den zweiten Polschuh berührt. Das externe Magnetfeld kann an das Werkzeug so angelegt werden, dass das externe Magnetfeld die Kavität zwischen dem ersten und dem zweiten Polschuh homogen durchflutet, so dass der magnetisch aktive Stoff im hohen Maße in eine Richtung ausgerichtet wird, die einen hohen Fluss an dem zweiten Enden des ersten und zweiten Polschuhs bewirkt.

Der Bearbeitungsbereich kann 100 °C bis 150 °C betragen. In diesem Bearbeitungsbereich verändern sich hochkoerzitive Eigenschaften des magnetisch aktiven Stoffs nicht in dem Maße, wie dies bei einem Sintern des magnetisch aktiven Stoffs der Fall ist. Bei einer Herstellung eines Permanentmagneten mit einem üblichen Sinterverfahren müssen bis 1000 °C vorherrschen. Bei einem erfindungsgemäßen Grundelement können bei einer erfindungsgemäßen Herstellung im Bearbeitungsbereich von 100 °C bis 150 °C die magnetischen Eigenschaften des magnetisch aktiven Stoffes, insbesondere eines Seltene Erde Elements vorteilhaft genutzt werden.

Nach dem Abkühlen des Werkzeugs auf die Resttemperatur hat sich die Struktur der Matrix ausgebildet, die zu der festen Form der Matrix führt. Die Matrix weist eine so feste Form auf, dass der magnetisch aktive Stoff in der Matrix in einem Betrieb der elektrischen Maschine fixiert ist. Insbesondere weist die Struktur der Matrix hierzu nach der Herstellung des Grundelements chemische Verbindungen auf, die sich in der Matrix nach dem Einfüllen in das Werkzeug unter einer Erwärmung ausbilden.

Wenn die Matrix einen Kunststoff aufweist, ist der Kunststoff nach dem Abkühlen des Werkzeugs auf die Resttemperatur ausgehärtet.

Die Matrix kann einen Kunststoff aufweisen, der vor der Herstellung in der anderen Form als ein Compound oder eine Mischung, insbesondere pulverförmig, körnig oder in einem viskosen Zustand, bereitgestellt wird. Das Compound oder die Mischung wurde durch eine Compoundierung oder einer Kunststoffaufbereitung gezielt für die Herstellung und Verwendung des erfindungsgemäßen Grundelements aufbereitet.

Der Permanentmagnet kann nach dem Aushärten mit einem externen Magnetfeld nachmagnetisiert werden. Dies erhöht noch einmal die magnetischen Eigenschaften, z.B. die Remanenzflussdichte. Das Nachmagnetisieren kann mit einer magnetischen Flussdichte von 4,5 T erfolgen. Das Nachmagnetisieren kann mit einem externen Magnetfeld, das an dem Werkzeug erzeugt wird, erfolgen. So ist keine zusätzliche Vorrichtung zum Nachmagnetisieren notwendig.

Die Matrix kann einen Duroplasten aufweisen. Ein Duroplast ermöglicht ein vorteilhaftes Komprimieren der Matrix mit dem magnetisch aktiven Stoff, insbesondere bei einem Komprimieren durch Formpressen. Duroplaste weisen nach dem Aushärten auch bei erhöhten Temperaturen in einem Betrieb der elektrischen Maschine eine hohe mechanische Beständigkeit auf, so dass im Betrieb der elektrischen Maschine der magnetisch aktive Stoff in seiner Position in der Matrix innerhalb des Permanentmagneten fixiert ist, um ein hohen magnetischen Fluss zu erzeugen.

Die Matrix kann als Pulver vor dem Einfüllen in das Werkzeug bereitgestellt werden, in der der magnetisch aktive Stoff eingemischt ist. So kann eine gleichmäßige Komprimierung der Matrix mit dem magnetisch aktiven Stoff erreicht werden, was eine Verbesserung der Leistungsfähigkeit einer erfindungsgemäßen elektrischen Maschine ermöglicht.

Der magnetisch aktive Stoff kann eine Oberfläche aufweisen, die einen Stoff umfasst, der mit der Matrix eine stoffschlüssige Verbindung eingehen kann. Dies verbessert weiterhin das Komprimieren der Matrix mit dem eingebetteten magnetisch aktiven Stoff.

Wenn der magnetisch aktive Stoff eine Anisotropie aufweist, insbesondere eine intrinsische Anisotropie und/oder eine kristalline Anisotropie, kann sich der magnetisch aktive Stoff in der Matrix entlang einer durch das externe Magnetfeld vorgegeben Vorzugsrichtung ausrichten, solange die Matrix einen pulverförmigen, körnigen oder viskosen Zustand aufweist, d.h. noch nicht erstarrt ist. So kann die Anisotropie vorteilhaft genutzt werden, um das Erzeugen und das zur Verfügung stellen des magnetischen Flusses in hohem Maße am zweiten Ende des ersten und des zweiten Polschuhs zu verbessern.

In einer weiteren vorteilhaften Ausgestaltung einer erfindungsgemäßen elektrischen Maschine weist der magnetisch aktive Stoff einen Ferrit oder ein chemische Element auf, das zu den seltenen Erden zählt. Der magnetisch aktive Stoff kann z.B. eine Samarium-Kobalt-Legierung oder eine Neodym-Eisen-Bor-Legierung aufweisen. Es können so die magnetischen Eigenschaften des Ferrits, der seltenen Erden, der Samarium-Kobalt-Legierung oder der Neodym-Eisen-Bor-Legierung vorteilhaft genutzt werden. So können die Leistungseigenschaften der erfindungsgemäßen elektrischen Maschine verbessert werden.

In einer weiteren vorteilhaften Ausgestaltung einer erfindungsgemäßen elektrischen Maschine umfasst der magnetisch aktive Stoff Körner, die eine Oxidschicht und einen magnetisch aktiven Teil aufweisen, wobei der magnetisch aktive Teil der Körner zumindest teilweise von der Oxidschicht umgeben ist. Die Oxidschicht verringert vorteilhaft Wirbelströme, die durch Kontakt zweier Körner zwischen den Körnern oder zwischen mehreren Körnern fließen können. So wird insbesondere auch bei einer Ausgestaltung, bei der der Permanentmagnet durch Komprimieren der Matrix mit dem magnetisch aktiven Stoff erzeugt wurde, die Leistungsfähigkeit einer erfindungsgemäßen elektrischen Maschine verbessert.

Die erfindungsgemäße Ausgestaltung kann vorteilhaft bei einer erfindungsgemäßen elektrischen Maschine die Leistungseigenschaften verbessern, wenn dieser mit einer hohen Grundfrequenz betrieben wird. Es werden bei der hohen Grundfrequenz die Leistungseigenschaften der erfindungsgemäßen elektrischen Maschine weniger stark durch die Wirbelströme der hohen Grundfrequenz verringert.

Die Grundfrequenz ist das Produkt aus der Polpaarzahl und der Drehzahl einer elektrischen Maschine.

Eine erfindungsgemäße elektrische Maschine kann als Wicklungen Zahnspulenwicklungen aufweisen. Durch die erfindungsgemäße Ausführung der elektrischen Maschine können auch hier die wirbelströme vorteilhaft reduzieren und so die Leistungseigenschaften verbessern.

Wenn der magnetisch aktive Stoff einer erfingdungsgemäß elektrische Maschine gemäß einer bereits beschriebenen vorteilhaften Ausgestaltung einen Ferrit oder ein chemische Element, das zu den seltenen Erden zählt, oder eine Samarium-Kobalt-Legierung oder eine Neodym-Eisen-Bor-Legierung aufweist, so kann vorteilhaft der magnetisch aktive Teil das Ferrit oder das chemische Element, das zu den seltenen Erden zählt, oder die Samarium-Kobalt-Legierung oder die Neodym-Eisen-Bor-Legierung aufweisen.

In einer weiteren vorteilhaften Ausgestaltung einer erfindungsgemäßen elektrischen Maschine weist der Permanentmagnet eine erste Berührungsfläche mit dem ersten Polschuh auf und weist der Permanentmagnet eine zweite Berührungsfläche mit dem zweiten Polschuh auf. Der magnetische Fluss wird so vom Permanentmagneten auf kurzem Wege in den ersten Polschuh und den zweiten Polschuh geführt. So wird die Bereitstellung eines hohen magnetischen Flusses an dem zweiten Ende des ersten Polschuhs und an dem zweiten Ende des zweiten Polschuhs verbessert. Damit wird die Leistungsfähigkeit der erfindungsgemäßen elektrischen Maschine des erfindungsgemäßen elektrischen Motors verbessert.

Die erste Berührungsfläche kann den ersten Polschuh direkt an dem ersten Bereich berühren und die zweite Berührungsfläche kann den zweiten Polschuh direkt am zweiten Polschuh berühren. So wird der magnetische Fluss, der vom Permanentmagneten erzeugt wird, auf kurzem Wege in den ersten Bereich bzw. in den zweiten Bereich geführt.

Wird bei einem erfindungsgemäßen Verfahren zur Herstellung eines erfindungsgemäßen Grundelements der Permanentmagnet durch Komprimieren der Matrix mit dem magnetisch aktiven Stoff erzeugt, so kann vorteilhaft eine große Berührungsfläche des Permanentmagneten mit dem ersten Bereich des ersten Polschuhs und eine große Berührungsfläche des Permanentmagneten mit dem zweiten Bereich des zweiten Polschuhs erzeugt werden. So wird in hohem Maße der vom Permanentmagneten erzeugte magnetische Fluss vom Permanentmagneten in den ersten bzw. zweiten Polschuh geführt.

In einer weiteren vorteilhaften Ausgestaltung einer erfindungsgemäßen elektrischen Maschine ist der erste Polschuh mit dem permanentmagneten über ein erstes Verbindungsmittel verbunden. Das erste Verbindungsmittel gewährleistet, dass der von dem Permanentmagneten erzeugte magnetische Fluss auf kurzem Wege in den ersten Polschuh geführt wird. So wird die Leistungsfähigkeit einer erfindungsgemäßen elektrischen Maschine verbessert.

Das erste Verbindungsmittel kann den ersten Polschuh mit dem Permanentmagneten so verbinden, dass ein Verschieben des Permanentmagneten in einem Betrieb der elektrischen Maschine durch eine Kraftkomponente parallel zur ersten Berührungsfläche vermindert werden kann. Dies verbessert die Leistungsfähigkeit einer erfindungsgemäßen elektrischen Maschine, da die Berührungsfläche zwischen dem ersten Polschuh und dem Permanentmagneten auch bei hohen Anforderungen an die Leistungsfähigkeit der erfindungsgemäßen elektrischen Maschine im Betrieb erhalten bleiben.

Das erste Verbindungsmittel kann so ausgebildet sein, dass es ein Verschieben des Permanentmagneten durch eine Kraftkomponente senkrecht zu der ersten Berührungsfläche behindert. So wird erreicht, dass während eines Betriebs einer erfindungsgemäßen elektrischen Maschine der magnetische Fluss auf kurzem Weg vom Permanentmagneten in den ersten Polschuh gelangt.

Der erste Polschuh kann kraftschlüssig mit dem Permanentmagneten über das erste Verbindungsmittel verbunden sein. Eine kraftschlüssige Verbindung ermöglicht auch bei einer Materialverschiebung beim Permanentmagneten im Betrieb der erfindungsgemäßen elektrischen Maschine eine Verbindung zwischen dem Permanentmagneten und dem ersten Polschuh, die es ermöglicht, den magnetischen Fluss, der durch den Permanentmagneten erzeugt wurde, auf kurzem Weg in den ersten Polschuh zu führen.

Der erste Polschuh kann formschlüssig mit dem Permanentmagneten über das erste Verbindungsmittel verbunden sein. Der Permanentmagnet kann ein Gegenstück zum ersten Verbindungsmittel aufweisen, wobei der erste Polschuh durch eine formschlüssige Verbindung zwischen dem Gegenstück und dem ersten Verbindungsmittel mit dem Permanentmagneten verbunden ist. Die formschlüssige Verbindung wird vorteilhaft bei der Erzeugung des Permanentmagneten hergestellt.

Der erste Polschuh kann mit dem Permanentmagneten stoffschlüssig über das erste Verbindungsmittel verbunden sein. Die stoffschlüssige Verbindung kann vorteilhaft während des Erzeugens des Permanentmagnets erfolgen. Hierzu kann der erste Polschuh an der ersten Berührungsfläche oder einer anderen Oberfläche mit einem Kleber versehen werden, der mit dem ersten Polschuh eine stoffschlüssige Verbindung eingeht und der mit der Matrix und/oder dem magnetisch aktiven Stoff eine stoffschlüssige Verbindung eingeht. Die stoffschlüssigen Verbindungen können durch Einwirken der Einfülltemperatur verstärkt werden.

Der zweite Polschuh kann - wie für den ersten Polschuh beschrieben - vorteilhaft mit dem Permanentmagneten über ein zweites Verbindungsmittel verbunden sein.

Der erste Polschuh kann eine Komponente aufweisen, die einstückig mit dem ersten Verbindungsmittel verbunden ist. Das erste verbindungsmittel kann so in einfacher Weise beim Herstellen der Komponente erzeugt werden.

Die Komponente kann ein Blech sein. Das erste Verbindungsmittel kann an dem Blech mit einer hohen Genauigkeit hergestellt werden.

Das erste Verbindungsmittel kann ein Zwischenraum zwischen einer ersten und einer zweiten Komponente des ersten Polschuhs sein. So kann beim Erzeugen des Permanentmagneten die Matrix und der magnetisch aktive Stoff in den Zwischenraum eindringen und sich verfestigen. So wird vorteilhaft ein erstes Verbindungsmittel erzeugt, das es ermöglicht, den vom Permanentmagnet erzeugten magnetischen Fluss auf kurzem Weg in die Polschuhe zu führen.

Das erste Verbindungsmittel kann vorteilhaft die isolierende Schicht der Bleche aufweisen. Es kann vorteilhaft eine stoffschlüssige Verbindung zwischen der Matrix oder dem magnetisch aktiven Stoff und einem Stoff der isolierenden Schicht während des Erzeugens des Permanentmagneten erzeugt werden.

Eine Verbindung des ersten Verbindungsmittels des ersten Polschuhs und des zweiten Verbindungsmittels des zweiten Polschuhs kann vorteilhaft durch den magnetisch aktiven Stoff formschlüssig verbessert werden, insbesondere dann, wenn der Permanentmagnet durch Komprimieren der Matrix mit dem magnetisch aktiven Stoff erzeugt ist.

In einer weiteren vorteilhaften Ausgestaltung einer erfindungsgemäßen elektrischen Maschine schließen die Flächen der zweiten Enden des weiteren erste Polschuh und des zweiten Polschuhs, die linear unabhängig, insbesondere senkrecht, zu den durch die ersten Richtungen und zweiten Richtungen gebildeten Flächen sind, an direkt benachbarten Stellen direkt aneinander an und neigen sich zum Permanentmagneten und zum weiteren Permanentmagneten hin, so dass im Idealfall die Flächen der zweiten Enden des weiteren ersten Polschuhs und des zweiten Polschuhs eine durchgehende Fläche bilden die so gekrümmt ist, dass die Fläche sich zum Permanentmagneten und zum weiteren Permanentmagneten hin neigt. So werden Rastmomente gering gehalten, die ihre Ursache in einer Gestaltung des Übergangs zwischen dem zweiten Polschuh und dem ersten Polschuh haben.

In einer weiteren vorteilhaften Ausgestaltung einer erfindungsgemäßen elektrischen Maschine weist das Sekundärteil einen Träger auf, der eine zylindrische Grundform aufweist, wobei das Grundelement am Träger befestigt ist, wobei eine Flächennormale einer Mantelfläche der zylindrischen Grundform sich vom ersten Ende des ersten Polschuhs zum zweiten Ende des ersten Polschuhs erstreckt. Die sehr genaue Herstellung eines erfindungsgemäßen Grundelements ermöglicht es, die Grundelemente auf einer Mantelfläche einer zylindrischen Grundform konzentrisch anzuordnen, wobei Spalte zwischen den Grundelementen sehr kleine Abmessungen haben. So wird der Raum um die Mantelfläche in hohem Maße für eine Erzeugung eines magnetischen Flusses durch Permanentmagnete und das Bereitstellen des magnetischen Flusses in hohem Maße an den Polschuhen der Grundelemente erreicht.

In einer weiteren vorteilhaften Ausgestaltung einer erfindungsgemäßen elektrischen Maschine ist die elektrische Maschine ein Torquemotor. Durch das Grundelement wird im hohen Maße am zweiten Ende des ersten und des zweiten Polschuhs ein hoher magnetischer Fluss zur Verfügung gestellt, dessen Pfad über den Luftspalt und dem Primärteil auf kurzem Wege geschlossen wird. So wird eine hohe Kraftdichte erzeugt, die bei einem Torquemotor für hohe Drehmomente genutzt werden kann. Es sind bei einem flüssigkeitsgekühlten Torquemotoren Kraftdichten von 5 bis 20 N/cm² möglich. Unter Kraftdichte wird die von einer elektrischen Maschine bereitgestellte Kraft bezogen auf eine Oberfläche des Sekundärteils verstanden, die den Luftspalt begrenzt.

Insbesondere wird bei einem erfindungsgemäßen Torquemotor die hohe Kraftdichte bei hohen Grundfrequenzen weniger stark durch Wirbelströme oder Erwärmung der Permanentmagnete verringert. So ist es möglich, den Torquemotor sowohl für die Positionieraufgaben als auch für Aufgaben mit hoher Drehzahl einzusetzen, ohne dass eine große Verschlechterung der Kraftdichte und der Leistungseigenschaften des Torquemotors erfolgt. Der Torquemotor kann so vorteilhaft bei Grundfrequenzen von 50 Hz bis 2 kHz eingesetzt werden.

In einer weiteren vorteilhaften Ausgestaltung einer erfindungsgemäßen elektrischen Maschine enthält der magnetisch aktive Stoff ein chemisches Element, insbesondere ein seltene Erde Element, nicht in der Konzentration, die notwendig ist, um eine Verschlechterung hochkoerzitiver Eigenschaften des magnetisch aktiven Stoffs bei einem Sinterprozess zu vermindern.

Bei der erfindungsgemäßen Verwendung des magnetisch aktiven Stoffs wird auf ein Sintern verzichtet, so dass der magnetisch aktive Stoff für die erfindungsgemäße Verwendung in einer erfindungsgemäßen elektrischen Maschine oder eines erfindungsgemäßen Grundelements nicht notwendig ist.

Bei der Herstellung des magnetisch aktiven Stoffs, insbesondere vor oder während der Herstellung eines erfindungsgemäßen Grundelements, müssen keine chemischen Elemente, insbesondere keine seltenen Erden, aktiv hinzugegeben werden. Insbesondere muss dem magnetisch aktiven Stoff kein Dysprosium hinzugefügt werden, um die Verschlechterung der hochkoerzitiven Eigenschaften durch einen Sinterprozess zu vermindern. So können vorteilhaft die Leistungseigenschaften einer erfindungsgemäßen elektrischen Maschine verbessert werden, mit dem Vorteil, dass die Kosten für das Dysprosium eingespart werden.

Der magnetisch aktive Stoff kann pulverförmig sein und Körner aufweisen. So kann der magnetisch aktive Stoff in eine beliebige Form gebracht werden. Die Körner können, wie beschrieben, vorteilhaft eine Oxidschicht aufweisen.

Die Körner können vorteilhaft zusätzlich eine Beschichtung aus einem Kunststoff aufweisen. Wenn die Matrix einen Duroplasten aufweist, ist der Kunststoff vorteilhaft ein Duroplast.

Der magnetisch aktive Stoff kann mit einem Bestandteil der Matrix oder den Bestandteilen der Matrix pulverförmig vermischt sein. So müssen nur wenige oder keine weiteren Stoffe für den Permanentmagneten bei einer Herstellung eines erfindungsgemäßen Grundelementes bereitgestellt werden. Wenn der magnetisch aktive Stoff mit einem Bestandteil der Matrix oder den Bestandteilen der Matrix pulverförmig vermischt ist, kann auch eine homogenere Verteilung des magnetisch aktiven Stoffes im Permanentmagneten verbessert werden.

Die Körner des magnetisch aktiven Stoffes können eine Oberfläche aufweisen, die zumindest teilweise eine Wechselwirkungsschicht aufweist, die mit der Matrix wechselwirkt. Dies kann unter anderem das Komprimieren der Matrix mit dem magnetisch aktiven Stoff verbessern.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigen:
- FIG 1: ein Ausführungsbeispiel eines Grundelement.
- FIG 2: einen Querschnitt entlang der Linie II-II der FIG 1,
- FIG 3: einen vergrößerten Ausschnitt der FIG 2,
- FIG 4: ein Ausführungsbeispiel einer Vorrichtung zur Herstellung eines Grundelements,
- FIG 5: einen Querschnitt entlang der Linie V-V der FIG 4,
- FIG 6: ein Ausführungsbeispiel eines magnetisch aktiven Stoffs,
- FIG 7: ein Ausführungsbeispiel einer elektrischen Maschine.

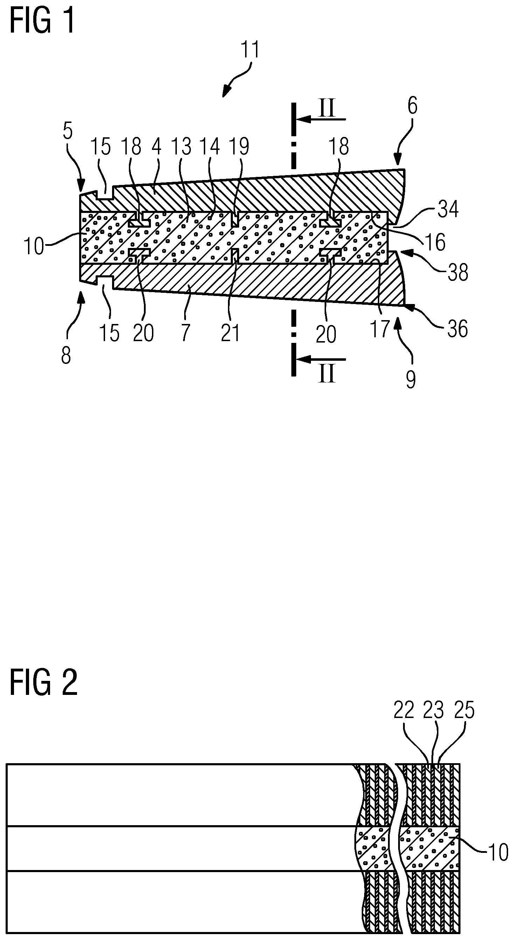

Die Figur 1 zeigt ein Ausführungsbeispiel eines Grundelements 11 für eine elektrische Maschine. Das Grundelement 11 umfasst eine ersten Polschuh 4, einen zweiten Polschuh 7 und einen Permanentmagneten 10. Der Permanentmagnet 10 weist eine vom ersten Polschuh 4 zum zweiten Polschuh 7 verlaufende Magnetisierung auf, wobei der Permanentmagnet 10 zwischen dem ersten Polschuh 4 und dem zweiten Polschuh 7 angeordnet ist. Der Permanentmagnet 10 weist eine Matrix 13 auf, in der ein magnetisch aktiver Stoff 14 eingebettet ist. Der erste Polschuh 4 weist ein erstes Ende 5 und ein zweites Ende 6 auf. Der zweite Polschuh 7 weist ein erstes Ende 8 und ein zweites Ende 9 auf. Eine Öffnung 34 ermöglicht vorteilhaft eine Reduzierung des Streuflusses an den zweiten Enden 6, 9 des ersten Polschuhs 4 und des zweiten Polschuhs 7. In einem anderen Ausführungsbeispiel kann die Öffnung 34 mittels einer nichtmagnetischen Schweißnaht, z.B. aus NiCr, verschlossen sein.

Der erste Polschuh 4 ist mit dem Permanentmagneten 10 über erste Verbindungsmittel 18 verbunden. Die ersten Verbindungsmittel 18 sind T-förmig und vermindern so ein Verschieben des Permanentmagneten 10 im Betrieb einer elektrischen Maschine, die das Grundelement 11 aufweist, durch eine Kraftkomponente parallel zu einer ersten Berührungsfläche 16. Dadurch, dass die ersten Verbindungsmittel 18 T-förmig sind, behindern sie auch ein Verschieben des Permanentmagneten 10 durch eine Kraftkomponente senkrecht zur ersten Berührungsfläche 16. Der erste Polschuh 4 weist ein weiteres Verbindungsmittel 19 auf, das durch seinen Formschluss mit dem Permanentmagneten 10 überwiegend ein Verschieben des Permanentmagneten 10 im Betrieb einer elektrischen Maschine durch eine Kraftkomponente parallel zur ersten Berührungsfläche 16 vermindert. Der zweite Polschuh 7 weist zweite Verbindungsmittel 20 und ein weiteres Verbindungsmittel 21 auf. Diese Verbindungsmittel 20, 21 wirken analog zu den Verbindungsmitteln des ersten Polschuhs 4.

Das Grundelement 11 weist am ersten Polschuh 4 und am zweiten Polschuh 7 Ausnehmungen 15 auf, die zu einer Befestigung des Grundelements 11 an ein Sekundärteil dienen können.

FIG 2 zeigt einen Querschnitt des Grundelements der FIG 1 entlang der Linie II-II. Der erste Polschuh 4 ist durch Elektrobleche, gebildet, die durch Stanzpaketieren zu einem Blechpaket geschichtet sind. Zwischen den Elektroblechen sind isolierende Schichten 23 vorhanden, die die Elektrobleche als einen ersten Bereich, weitere erste Bereiche, einen zweiten Bereich oder weitere zweite Bereiche mit einer magnetischen Permeabilitätszahl µᵣ > 2 elektrisch mit einem hohen Widerstand trennt, was zu einer Reduzierung von Wirbelströmen zwischen den Bereichen im Betrieb einer elektrischen Maschine mit dem Grundelement 11 führt. Eines der Elektrobleche des ersten Polschuhs 4 ist eine erste Komponente 22. Ein zweites der Elektrobleche ist eine zweite Komponente 25. So ist zwischen der ersten Komponente 22 und der zweiten Komponente 25 des ersten Polschuhs 4 eine isolierende Schicht 23 vorhanden. Die erste Komponente 22 ist einstückig mit dem ersten Verbindungsmittel 18,19 verbunden. Der zweite Polschuh 7 ist analog zum ersten Polschuh 4 aufgebaut. Da die Elektrobleche des ersten Polschuhs 4 und zweiten Polschuhs 7, wie z.B. die erste Komponente 22, ferromagnetisch sind, weisen diese eine magnetische Permeabilitätszahl µᵣ mit einem Wert von 300 bis 600.000 auf.

Die erste Berührungsfläche 16 des Permanentmagneten 10 berührt die Elektrobleche des ersten Polschuhs 4, wie z.B. die erste Komponente 22, direkt. Eine zweite Berührungsfläche 17 des Permanentmagneten 10 berührt die Elektrobleche des zweiten Polschuhs 7 direkt.

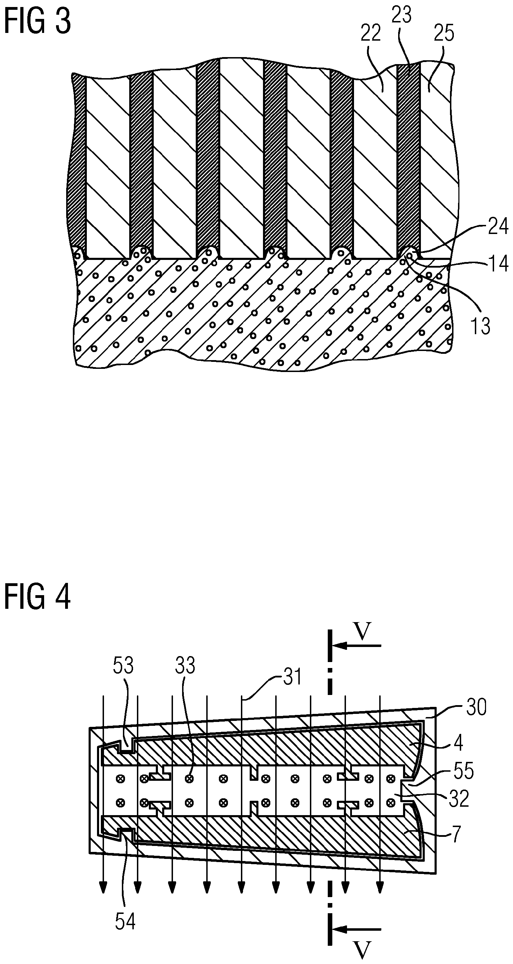

FIG 3 zeigt einen vergrößerten Ausschnitt der FIG 2. Die FIG 2 zeigt, dass ein zusätzliches erstes verbindungsmittel ein Zwischenraum 24 zwischen der ersten Komponente 22 und der zweiten Komponente 25 des ersten Polschuhs 4 ist. Beim Erzeugen des Permanentmagneten dringen die Matrix 13 mit dem magnetisch aktive Stoff 14 in den Zwischenraum 24 ein und verfestigt sich. Des Weiteren wird eine stoffschlüssige Verbindung zwischen der Matrix 13 oder dem magnetisch aktiven Stoff 14 und einem Stoff der isolierenden Schicht 23 während des Erzeugens des Permanentmagneten 10 erzeugt.

FIG 4 zeigt ein Ausführungsbeispiel einer Vorrichtung 60 zur Herstellung eines Grundelements. Bei einem Ausführungsbeispiel eines Verfahrens zur Herstellung eines Grundelements 11 werden der erste Polschuh 4 und der zweite Polschuh 7 in ein Werkzeug 30 eingelegt. Das Werkzeug 30 weist eine erste Nase 53, eine zweite Nase 54 und eine dritte Nase 55 auf. Die drei Nasen 53, 54 und 55 ermöglichen es, den ersten und zweiten Polschuh 4 und 7 präzise in das Werkzeug 30 einzulegen und deren Position präzise festzulegen. Der erste Polschuh 4, der zweite Polschuh 7 und das Werkzeug 30 bilden so eine Kavität 32, die mit der Matrix 13 und dem magnetisch aktiven Stoff 14 gefüllt werden kann, so dass nach dem Aushärten der Matrix 13 der Permanentmagnet 10 mit seiner ersten und zweiten Berührungsfläche 16 und 17 präzise erzeugt worden ist. Die dritte Nase 55 des Werkzeugs 30 bedingt eine Öffnung 34 am Grundelement 11. Die Öffnung 34 trennt den ersten Bereich vom zweiten Bereich, bzw. die weiteren ersten Bereiche von den weiteren zweiten Bereiche, an den zweiten Enden 6, 9 der Polschuhe 4, 7. Die Matrix 13, die ein Epoxidharz ist, und der magnetisch aktive Stoff 14, der eine Neodym-Eisen-Bor-Legierung umfasst, werden vor dem Einfüllen in das Werkzeug 30 auf eine Einfülltemperatur von ca. 150 °C erwärmt, bei der die Matrix 13 einen viskosen Zustand aufweist. Nach dem Einlegen des ersten Polschuhs 4 und des zweiten Polschuhs 7 in das Werkzeug 30 wird die Matrix 13 im viskosen Zustand mit dem magnetisch aktiven Stoff 14 in das Werkzeug 30 eingefüllt. Anschließend wird die Matrix 13 mit dem magnetisch aktiven Stoff 14 im den Faktor 1,3 bis 2 komprimiert.

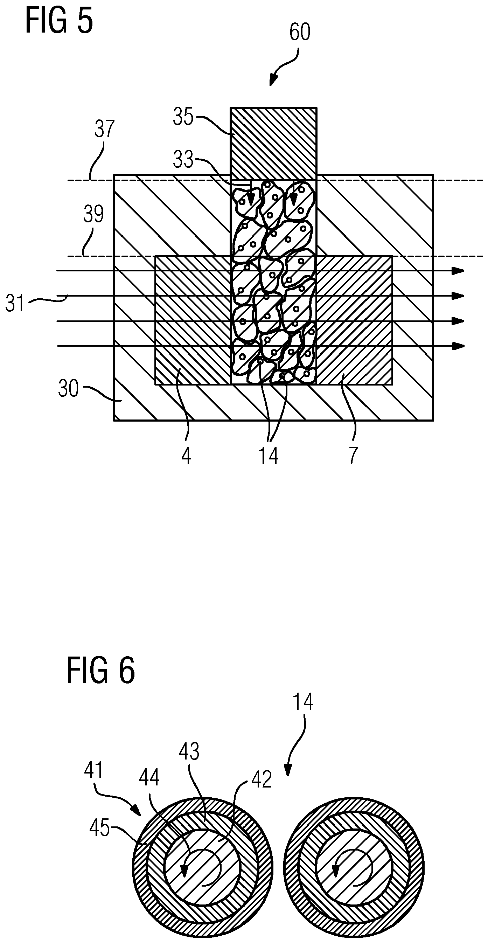

Die FIG 5 zeigt einen Querschnitt der Vorrichtung 60 der FIG 4 entlang der Linie V-V. Die Vorrichtung 60 weist wenigstens einen Stempel 35 auf, der in einer Richtung 33 von einer ersten Position 37 in eine zweite Position 39 gebracht wird. Dabei wird die Matrix 13 mit dem magnetisch aktiven Stoff 14 um den Faktor 1,3 bis 2 komprimiert. Solange die Matrix 13 in einem viskosen Zustand ist, wird an dem Werkzeug 30 ein externes Magnetfeld mit einer Richtung 31 angelegt, so dass das externe Magnetfeld vom ersten Polschuh 4 zum zweiten Polschuh 7 gerichtet ist. Das Werkzeug 30 wird während des Einfüllens der Matrix 13 mit dem magnetisch aktiven Stoff 14, mindestens auf einer Temperatur zwischen 80 und 160 °C gehalten, so dass die Matrix 13 im viskosen Zustand bleibt. So kann sich der magnetisch aktive Stoff 14 in der Matrix 13 entlang einer durch das externe Magnetfeld vorgegebenen Vorzugsrichtung ausrichten. Nach Verstreichen eines bestimmten Zeitraums nach dem Anlegen des externen Magnetfelds hat sich der magnetisch aktive Stoff 14 in die Vorzugsrichtung ausgerichtet, so dass die Temperatur des Werkzeugs erniedrigt werden kann. Nach dem Abkühlen des Werkzeugs 30 auf eine Resttemperatur wird das externe Magnetfeld abgeschaltet. Anschließend wird der Permanentmagnet 10 des Grundelements 11 durch Anlegen eines externen Magnetfelds, das ebenfalls die Richtung 31 aufweist, zusätzlich aufmagnetisiert. Das externe Magnetfeld zum Aufmagnetisieren des Permanentmagneten 10 ist etwa um den Faktor 2 größer als das externe Magnetfeld, das während des Komprimierens der Matrix 13 mit dem magnetisch aktiven Stoff 14 am Werkzeug 30 angelegt wurde. Die magnetische Flussdichte des externen Magnetfelds zum zusätzlichen Aufmagnetisieren kann 4,5 Tesla betragen.

FIG 6 zeigt ein Ausführungsbeispiel eines magnetisch aktiven Stoffs 14, wobei repräsentativ zwei Körner 41 gezeigt werden, die der magnetisch aktive Stoff 14 umfasst. Ein Korn 41 weist einen magnetisch aktiven Teil 42 auf und eine Oxidschicht 43. Die Oxidschicht 43 umgibt den magnetisch aktiven Teil 42 des Korns 41. Die Oxidschicht 43 trägt vorteilhaft zur Verringerung von Wirbelströmen bei, die durch Kontakt zweier Körner zwischen zwei oder mehreren Körnern fließen können. So ist im Idealfall der Wirbelstrom 44 auf das Innere eines Korns 41 beschränkt. Wenn die Oxidschicht 43 den magnetisch aktiven Teil 42 des Korns 41 nur teilweise umgibt, werden Wirbelströme zwischen zwei oder mehreren Körnern zumindest verringert. Das Korn 41 ist von einer Wechselwirkungsschicht 45 zumindest teilweise umgeben. Diese Schicht 45 besteht aus einem Harz, das mit der Matrix 13 eine stoffschlüssige Verbindung unter Einwirkung einer Temperatur eingeht.

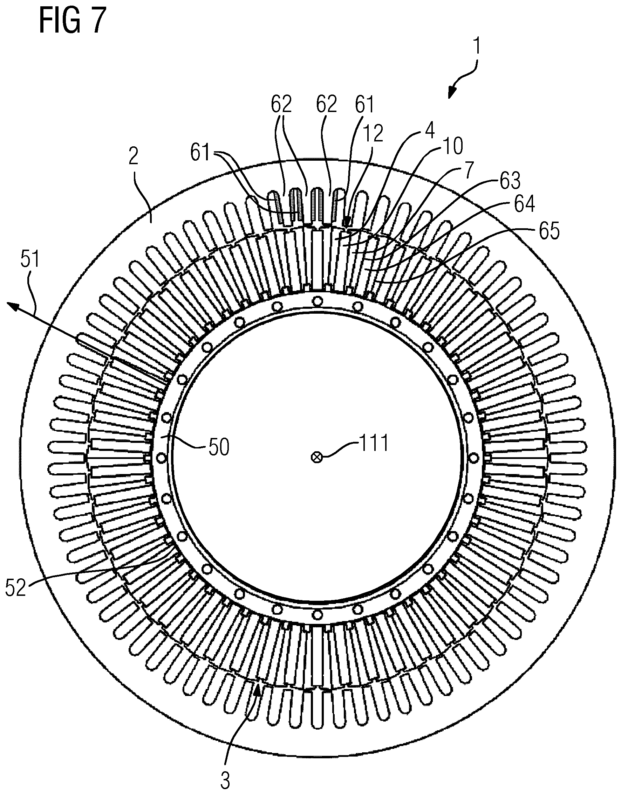

FIG 7 zeigt ein Ausführungsbeispiel einer elektrischen Maschine 1, die ein Torquemotor ist. Der Übersicht halber, sind in der FIG 7 nicht alle Elemente mit Bezugszeichen versehen. Es wird bezüglich dieser Elemente auf Bezugszeichen der FIG 1 verwiesen. Der Torquemotor umfasst ein Primärteil 2 und ein Sekundärteil 3, das ein Rotor ist. Das Sekundärteil 3 wirkt im Betrieb des Torquemotors über einen Luftspalt 12 mit dem Primärteil 2 zusammen, so dass sich das Sekundärteil 3 um die Drehachse 111 dreht. Des Weiteren umfasst der Torquemotor den ersten Polschuh 4, der das erste Ende 5 und das zweite Ende 6 aufweist, wobei das zweite Ende 6 dem Luftspalt 12 zugewandt ist. Außerdem weist der Torquemotor den zweiten Polschuh 7 auf, der das erste Ende 8 und das zweite Ende 9 aufweist, wobei das zweite Ende 9 dem Luftspalt 12 zugewandt ist. Des Weiteren weist der Torquemotor den Permanentmagneten 10 auf, der ein vom ersten Polschuh 4 zum zweiten Polschuh 7 verlaufende Magnetisierung aufweist. Ein Grundelement 11, das den ersten Polschuh 4, den zweiten Polschuh 7 und den Permanentmagneten 10 umfasst, ist am Sekundärteil 3 befestigt, wobei der Permanentmagnet 10 zwischen dem ersten Polschuh 4 und dem zweiten Polschuh 7 angeordnet ist. Der Permanentmagnet 10 weist eine Matrix 13 auf, in die ein magnetisch aktiver Stoff 14 eingebettet ist.

Das Primärteil 2 weist 74 Zähne 61 auf, an denen jeweils eine wicklung 61 befestigt ist, die einer Zahnspulenwicklung ist. In FIG 7 sind die Wicklungen 61 beispielhaft an drei Zähnen 62 eingezeichnet.

Das Sekundärteil 3 weist einen Träger 50 auf, der eine zylindrische Grundform aufweist, wobei das Grundelement, welches den ersten Polschuh 4, den zweiten Polschuh 7 und den Permanentmagneten 10 umfasst, am Sekundärteil 3 befestigt ist. Dabei erstreckt sich eine Flächennormale 51 einer Mantelfläche 52 der zylindrischen Grundform vom ersten Ende 5 des ersten Polschuhs 4 zum zweiten Ende 6 des ersten Polschuhs 4. Der Träger 50 ist aus einem Material, das eine magnetische Permeabilitätszahl µᵣ ≈ 1 aufweist. Der Träger 50 ist aus Aluminium, einem massiven, austenitischen Edelstahl, einem Faserverbundwerkstotf oder einem anderen magnetisch nicht leitfähigen mechanisch festen Werkstoff. Das Material Aluminium oder ein Faserverbundwerkstoff wird dann verwendet, wenn das Gewicht des Sekundärteils 3 reduziert werden soll.

Die elektrische Maschine 1 der FIG 7 besteht aus 50 Grundelementen 11, die auf der Mantelfläche der zylindrischen Grundform konzentrisch angeordnet sind und am Sekundärteil 3 befestigt sind, insbesondere am Träger 50. Die 50 Grundelementen 11 sind auf der Mantelfläche der zylindrischen Grundform auch rotationssymmetrisch angeordnet.

Ein weiterer erster Polschuh 63 und der zweite Polschuh 7 erstrecken sich an direkt benachbarten Stellen ihrer zweiten Enden weiter in den Luftspalt 12 als an den Stellen ihrer zweiten Enden, die dem Permanentmagneten 10 oder dem weiteren Permanentmagneten 64 näher liegen. Am Grundelement 11 der FIG 1 ist die direkt benachbarte Stelle 36 des zweiten Polschuhs 7 mit einem Bezugszeichen versehen. In FIG 1 ist auch die Stelle 38 des zweiten Polschuhs 7, die dem Permanentmagneten 10 näher liegt, mit einem Bezugszeichen versehen.

Ein Ausführungsbeispiel einer Werkzeugmaschine umfasst eine elektrische Maschine 1, wie diese in FIG 7 gezeigt ist. Ein Werkstück ist über ein Befestigungselement mit dem Sekundärteil 3 drehfest verbunden, so dass bei einer kontinuierlichen Rotation des Sekundärteils 3 um die Drehachse 111 mit einer bestimmten Drehzahl auch das Werkstück eine kontinuierliche Rotation um die Drehachse 111 mit der bestimmten Drehzahl für eine Drehbearbeitung erfährt, wobei sich eine Bearbeitungsstelle an einem äußeren Rand des Werkstücks mit eine kontinuierliche Umfangsgeschwindigkeit von beispielsweise mindestens 15 m/s um die Drehachse 111 für die Drehbearbeitung drehen kann. Die Drehbearbeitung kann dabei eine kontinuierliche Umfangsgeschwindigkeit von mindestens 15 m/s über einen längeren Zeitraum von mindestens 30 Sekunden bis hin zu mehreren Minuten andauern.

## Patentansprüche

1. Elektrische Maschine (1) umfassend
- ein Primärteil (2),
- ein Sekundärteil (3), das im Betrieb der elektrischen Maschine (1) über einen Luftspalt (12) mit dem Primärteil (2) zusammenwirkt,
- einen ersten Polschuh (4), der ein erstes Ende (5) und ein zweites Ende (6) aufweist, wobei das zweite Ende (6) des ersten Polschuhs (4) dem Luftspalt (12) zugewandt ist,
- einen zweiten Polschuh (7), der ein erstes Ende (8) und ein zweites Ende (9) aufweist, wobei das zweite Ende (9) dem Luftspalt (12) zugewandt ist,
- einen Permanentmagneten (10), der eine vom ersten Polschuh (4) zum zweiten Polschuh (7) verlaufende Magnetisierung aufweist,
- wobei ein Grundelement (11), das aus dem ersten Polschuh (4), dem zweiten Polschuh (7) und dem Permanentmagneten (10) besteht, am Sekundärteil (3) befestigt ist,
- wobei der Permanentmagnet (10) zwischen dem ersten Polschuh (4) und dem zweiten Polschuh (7) angeordnet ist,
- wobei der Permanentmagnet (10) eine Matrix (13) aufweist, in der ein magnetisch aktiver Stoff (14) eingebettet ist,
- wobei der Permanentmagnet (10) zwischen dem ersten Polschuh (4) und dem zweiten Polschuh (7) erzeugt ist, wobei der Permanentmagnet (10) den ersten Polschuh (4) des Grundelements (11) und den zweiten Polschuh (7) des Grundelements (11) voneinander trennt, wobei der erste Polschuh (4) einen ersten Bereich mit weichmagnetischen Eigenschaften und einer magnetischen Permeabilitätszahl *µ*ᵣ > 2 aufweist und der zweite Polschuh (7) einen zweiten Bereich mit weichmagnetischen Eigenschaften und einer magnetischen Permeabilitätszahl *µ*ᵣ > 2 aufweist, wobei mindestens ein zweites Grundelement, das aus einem weiteren ersten Polschuh (63), einem weiteren zweiten Polschuh (65) und einem weiteren Permanentmagneten (64) besteht, am Sekundärteil (3) befestigt ist, wobei der weitere erste Polschuh (63) sich entlang des zweiten Polschuhs (7) von dem ersten Ende (8) des zweiten Polschuh (7) zum zweiten Ende (9) des zweiten Polschuhs (7) erstreckt, wobei der weitere Permanentmagnet (64) eine vom weiteren zweiten Polschuh (65) zum weiteren ersten Polschuh (63) verlaufende Magnetisierung aufweist.

2. Elektrische Maschine (1) nach Anspruch 1,
wobei der räumliche Anteil des magnetisch aktiven Stoffs (14) größer ist als der räumliche Anteil der Matrix (13).

3. Elektrische Maschine (1) nach Anspruch 1 oder 2, wobei der magnetisch aktive Stoff (14) Körner (41) umfasst, die eine Oxidschicht (43) und einen magnetisch aktiven Teil (42) aufweisen, wobei der magnetisch aktive Teil (42) der Körner (41) zumindest teilweise von der Oxidschicht (43) umgeben ist.

4. Elektrische Maschine (1) nach einem der vorhergehenden Ansprüche, wobei der Permanentmagnet (10) eine erste Berührungsfläche (16) mit dem ersten Polschuh (4) aufweist und der Permanentmagnet (10) eine zweite Berührungsfläche (17) mit dem zweiten Polschuh (7) aufweist.

5. Elektrische Maschine (1) nach einem der vorhergehenden Ansprüche, wobei der erste Polschuh (4) mit dem Permanentmagneten (10) über ein erstes Verbindungsmittel (18,19,24) verbunden ist.

6. Elektrische Maschine (1) nach einem der vorhergehenden Ansprüche, wobei die ersten Polschuhe (4,63) und die zweiten Polschuhe (7,65) sich an direkt benachbarten Stellen (36) ihrer zweiten Enden (9) weiter in den Luftspalt (12) erstrecken als an den Stellen (38) ihrer zweiten Enden (9), die den Permanentmagneten (10, 64) näher liegen, indem die dem Luftspalt (12) zugewandten Flächen der zweiten Enden (9) zwischen den beiden Stellen (36,38) gekrümmt sind.

7. Elektrische Maschine (1) nach einem der vorhergehenden Ansprüche,
- wobei das Sekundärteil (3) einen Träger (50) aufweist, der eine zylindrische Grundform aufweist,
- wobei das Grundelement (11) am Träger (50) befestigt ist,
- wobei eine Flächennormale (51) einer Mantelfläche (52) der zylindrischen Grundform sich vom ersten Ende (5) des ersten Polschuhs (4) zum zweiten Ende (6) des ersten Polschuhs (4) erstreckt.

8. Elektrische Maschine (1) nach einem der vorhergehenden Ansprüche, wobei die elektrische Maschine (1) ein Torquemotor ist.

9. Grundelement (11) für eine elektrische Maschine (1) nach einem der vorhergehenden Ansprüche,
- wobei das Grundelement (11) aus dem ersten Polschuh (4), dem zweiten Polschuh (7) und dem Permanentmagneten (10) besteht,
- wobei der Permanentmagnet (10) zwischen dem ersten Polschuh (4) und dem zweiten Polschuh (7) angeordnet ist,
- wobei der Permanentmagnet (10) die Matrix (13) aufweist, in der der magnetisch aktive Stoff (14) eingebettet ist,
- wobei der Permanentmagnet (10) zwischen dem ersten Polschuh (4) und dem zweiten Polschuh (7) erzeugt ist,
- wobei der Permanentmagnet (10) den ersten Polschuh (4) des Grundelements (11) und den zweiten Polschuh (7) des Grundelements (11) voneinander trennt, wobei der erste Polschuh (4) einen ersten Bereich mit weichmagnetischen Eigenschaften und der magnetischen Permeabilitätszahl *µ*ᵣ > 2 aufweist und der zweite Polschuh (7) einen zweiten Bereich mit weichmagnetischen Eigenschaften und der magnetischen Permeabilitätszahl *µ*ᵣ > 2 aufweist,
- wobei sich bei einer Befestigung des Grundelements (11) und mindestens eines zweiten Grundelements an einem Sekundärteil der weitere erste Polschuh (63) des zweiten Grundelementes sich entlang des zweiten Polschuhs (7) von dem ersten Ende (8) des zweiten Polschuh (7) zum zweiten Ende (9) des zweiten Polschuhs (7) erstrecken kann, wobei das zweite Grundelement den weiteren ersten Polschuh (63), den weiteren zweiten Polschuh (65) und den weiteren Permanentmagneten (64) umfasst der die vom weiteren zweiten Polschuh (65) zum weiteren ersten Polschuh (63) verlaufende Magnetisierung aufweist.

10. Sekundärteil (3) für eine elektrische Maschine (1) nach einem der Ansprüche 1 bis 8,
- wobei das Sekundärteil das Grundelement (11) aufweist,
- wobei das Grundelement (11) aus dem ersten Polschuh (4), dem zweiten Polschuh (7) und dem Permanentmagneten (10) besteht,
- wobei der Permanentmagnet (10) zwischen dem ersten Polschuh (4) und dem zweiten Polschuh (7) angeordnet ist,
- wobei der Permanentmagnet (10) die Matrix (13) aufweist, in der der magnetisch aktiver Stoff (14) eingebettet ist,
- wobei der Permanentmagnet (10) zwischen dem ersten Polschuh (4) und dem zweiten Polschuh (7) erzeugt ist,
- wobei der Permanentmagnet (10) den ersten Polschuh (4) des Grundelements (11) und den zweiten Polschuh (7) des Grundelements (11) voneinander trennt, wobei der erste Polschuh (4) einen ersten Bereich mit weichmagnetischen Eigenschaften und der magnetischen Permeabilitätszahl *µ*ᵣ > 2 aufweist und der zweite Polschuh (7) einen zweiten Bereich mit weichmagnetischen Eigenschaften und der magnetischen Permeabilitätszahl *µ*ᵣ > 2 aufweist,
- wobei mindestens das zweite Grundelement, das den weiteren ersten Polschuh (63), den weiteren zweiten Polschuh (65) und den weiteren Permanentmagneten (64) umfasst, am Sekundärteil (3) befestigt ist, wobei der weitere erste Polschuh (63) sich entlang des zweiten Polschuhs (7) von dem ersten Ende (8) des zweiten Polschuh (7) zum zweiten Ende (9) des zweiten Polschuhs (7) erstreckt, wobei der weitere Permanentmagnet (64) die vom weiteren zweiten Polschuh (65) zum weiteren ersten Polschuh (63) verlaufende Magnetisierung aufweist.

11. Werkzeugmaschine, umfassend eine elektrische Maschine (1) nach einem der Ansprüche 1 bis 8.

12. Verfahren zur Herstellung eines Grundelements (11) für eine elektrische Maschine (1) nach einem der Ansprüche 1 bis 8, wobei der Permanentmagnet (10) zwischen dem ersten Polschuh (4) und dem zweiten Polschuh (7) erzeugt wird, wobei die Erzeugung des Permanentmagneten (10) zwischen dem ersten und dem zweiten Polschuh (4,7) auf das Grundelement (11) beschränkt ist, wobei der Permanentmagnet (10) den ersten Polschuh (4) des Grundelements (11) und den zweiten Polschuh (7) des Grundelements (11) voneinander trennt, wobei der erste Polschuh (4) den ersten Bereich mit weichmagnetischen Eigenschaften und der magnetischen Permeabilitätszahl *µ*ᵣ > 2 aufweist und der zweite Polschuh (7) den zweiten Bereich mit weichmagnetischen Eigenschaften und der magnetischen Permeabilitätszahl *µ*ᵣ > 2 aufweist.

13. Verfahren zur Herstellung eines Sekundärteils (3) für eine elektrische Maschine (1) nach einem der Ansprüche 1 bis 8, wobei das Grundelement (11) als eine Einheit am Sekundärteil (3) befestigt wird und mindestens das zweite Grundelement als eine Einheit am Sekundärteil (3) befestigt wird, wobei der Permanentmagnet (10) zwischen dem ersten Polschuh (4) und dem zweiten Polschuh (7) erzeugt ist, wobei der Permanentmagnet (10) den ersten Polschuh (4) des Grundelements (11) und den zweiten Polschuh (7) des Grundelements (11) voneinander trennt, wobei der erste Polschuh (4) den ersten Bereich mit weichmagnetischen Eigenschaften und der magnetischen Permeabilitätszahl *µ*ᵣ > 2 aufweist und der zweite Polschuh (7) den zweiten Bereich mit weichmagnetischen Eigenschaften und der magnetischen Permeabilitätszahl *µ*ᵣ > 2 aufweist, wobei der weitere erste Polschuh (63) des zweiten Grundelements sich entlang des zweiten Polschuhs (7) des Grundelements (11) von dem ersten Ende (8) des zweiten Polschuh (7) zum zweiten Ende (9) des zweiten Polschuhs (7) erstreckt, wobei der weitere Permanentmagnet (64) die vom weiteren zweiten Polschuh (65) zum weiteren ersten Polschuh (63) verlaufende Magnetisierung aufweist.

14. Verwendung eines magnetisch aktiven Stoffes (14) für eine elektrische Maschine (1) nach einem der Ansprüche 1 bis 8, wobei die elektrische Maschine (1)
- das Primärteil (2),
- das Sekundärteil (3), das im Betrieb der elektrischen Maschine (1) über den Luftspalt (12) mit dem Primärteil (2) zusammenwirkt,
- den ersten Polschuh (4), der das erste Ende (5) und das zweite Ende (6) aufweist, wobei das zweite Ende (6) des ersten Polschuhs (4) dem Luftspalt (12) zugewandt ist,
- den zweiten Polschuh (7), der das erste Ende (8) und das zweites Ende (9) aufweist, wobei das zweite Ende (9) dem Luftspalt (12) zugewandt ist,
- den Permanentmagneten (10), der die vom ersten Polschuh (4) zum zweiten Polschuh (7) verlaufende Magnetisierung aufweist,
umfasst,
- wobei das Grundelement (11), das aus dem ersten Polschuh (4), dem zweiten Polschuh (7) und dem Permanentmagneten (10) besteht, am Sekundärteil (3) befestigt ist,
- wobei der Permanentmagnet (10) zwischen dem ersten Polschuh (4) und dem zweiten Polschuh (7) angeordnet ist,
- wobei der Permanentmagnet (10) eine Matrix (13) aufweist, in der der magnetisch aktiver Stoff (14) eingebettet ist,
- wobei der Permanentmagnet (10) zwischen dem ersten Polschuh (4) und dem zweiten Polschuh (7) erzeugt ist,
wobei der Permanentmagnet (10) den ersten Polschuh (4) des Grundelements (11) und den zweiten Polschuh (7) des Grundelements (11) voneinander trennt, wobei der erste Polschuh (4) einen ersten Bereich mit weichmagnetischen Eigenschaften und der magnetischen Permeabilitätszahl *µ*ᵣ > 2 aufweist und der zweite Polschuh (7) einen zweiten Bereich mit weichmagnetischen Eigenschaften und der magnetischen Permeabilitätszahl *µ*ᵣ > 2 aufweist, wobei mindestens das zweite Grundelement, das aus dem weiteren ersten Polschuh (63), dem weiteren zweiten Polschuh (65) und dem weiteren Permanentmagneten (64) besteht, am Sekundärteil (3) befestigt ist, wobei der weitere erste Polschuh (63) sich entlang des zweiten Polschuhs (7) von dem ersten Ende (8) des zweiten Polschuh (7) zum zweiten Ende (9) des zweiten Polschuhs (7) erstreckt, wobei der weitere Permanentmagnet (64) die vom weiteren zweiten Polschuh (65) zum weiteren ersten Polschuh (63) verlaufende Magnetisierung aufweist.

## Claims

1. Electric machine (1) comprising
- a primary section (2),
- a secondary section (3) that interacts with the primary section (2) by way of an air gap (12) during operation of the electric machine (1),
- a first pole shoe (4), which has a first end (5) and a second end (6), the second end (6) of the first pole shoe (4) facing the air gap (12),
- a second pole shoe (7), which has a first end (8) and a second end (9), the second end (9) facing the air gap (12),
- a permanent magnet (10), which has magnetisation running from the first pole shoe (4) to the second pole shoe (7),
- wherein a base element (11), which comprises the first pole shoe (4), the second pole shoe (7) and the permanent magnet (10), is fastened to the secondary section (3),
- wherein the permanent magnet (10) is disposed between the first pole shoe (4) and the second pole shoe (7),
- wherein the permanent magnet (10) has a matrix (13), in which a magnetically active material (14) is embedded,
- wherein the permanent magnet (10) is generated between the first pole shoe (4) and the second pole shoe (7),
- wherein the permanent magnet (10) separates the first pole shoe (4) of the base element (11) and the second pole shoe (7) of the base element (11) from one another, wherein the first pole shoe (4) has a first region with magnetically soft properties and a magnetic permeability index of µᵣ > 2 and the second pole shoe (7) has a second region with magnetically soft properties and a magnetic permeability index of µᵣ > 2, wherein at least one second base element which comprises a further first pole shoe (63), a further second pole shoe (65) and a further permanent magnet (64) is fastened to the secondary section (3), wherein the further first pole shoe (63) extends along the second pole shoe (7) from the first end (8) of the second pole shoe (7) to the second end (9) of the second pole shoe (7), wherein the further permanent magnet (64) has magnetisation running from the further second pole shoe (65) to the further first pole shoe (63).

2. Electric machine (1) according to claim 1,
wherein the spatial portion of the magnetically active material (14) is greater than the spatial portion of the matrix (13).

3. Electric machine (1) according to claim 1 or 2, wherein the magnetically active material (14) comprises grains (41), which have an oxide layer (43) and a magnetically active portion (42), wherein the magnetically active portion (42) of the grains (41) is enclosed at least partially by the oxide layer (43).

4. Electric machine (1) according to one of the preceding claims, wherein the permanent magnet (10) has a first contact surface (16) with the first pole shoe (4) and the permanent magnet (10) has a second contact surface (17) with the second pole shoe (7).

5. Electric machine (1) according to one of the preceding claims, wherein the first pole shoe (4) is connected to the permanent magnet (10) by way of a first connecting means (18, 19, 24).

6. Electric machine (1) according to one of the preceding claims, wherein at directly adjacent points (36) of their second ends (9) the first pole shoes (4, 63) and the second pole shoes (7, 65) extend further into the air gap (12) than at the points (38) of their second ends (9) which are closer to the permanent magnets (10, 64), by the surfaces of the second ends (9) facing the air gap (12) being curved between the two points (36, 38).

7. Electric machine (1) according to one of the preceding claims,
- wherein the secondary section (3) has a support (50), which has a cylindrical base form,
- wherein the base element (11) is fastened to the support (50),
- wherein a surface normal (51) of a lateral surface (52) of the cylindrical base form extends from the first end (5) of the first pole shoe (4) to the second end (6) of the first pole shoe (4).

8. Electric machine (1) according to one of the preceding claims, wherein the electric machine (1) is a torque motor.

9. Base element (11) for an electric machine (1) according to one of the preceding claims,
- wherein the base element (11) comprises the first pole shoe (4), the second pole shoe (7) and the permanent magnet (10),
- wherein the permanent magnet (10) is disposed between the first pole shoe (4) and the second pole shoe (7),
- wherein the permanent magnet (10) has the matrix (13), in which the magnetically active material (14) is embedded,
- wherein the permanent magnet (10) is generated between the first pole shoe (4) and the second pole shoe (7),
- wherein the permanent magnet (10) separates the first pole shoe (4) of the base element (11) and the second pole shoe (7) of the base element (11) from one another, wherein the first pole shoe (4) has a first region with magnetically soft properties and the magnetic permeability index of µᵣ > 2 and the second pole shoe (7) has a second region with magnetically soft properties and the magnetic permeability index of µᵣ > 2,
- wherein when the base element (11) and at least one second base element are fastened to a secondary section, the further first pole shoe (63) of the second base element extends along the second pole shoe (7) from the first end (8) of the second pole shoe (7) to the second end (9) of the second pole shoe (7), wherein the second base element comprises the further first pole shoe (63), the further second pole shoe (65) and the further permanent magnet (64) which has the magnetisation running from the further second pole shoe (65) to the further first pole shoe (63).

10. Secondary section (3) for an electric machine (1) according to one of claims 1 to 8,
- wherein the secondary section has the base element (11),
- wherein the base element (11) comprises the first pole shoe (4), the second pole shoe (7) and the permanent magnet (10),
- wherein the permanent magnet (10) is arranged between the first pole shoe (4) and the second pole shoe (7),
- wherein the permanent magnet (10) has the matrix (13), in which the magnetically active material (14) is embedded,
- wherein the permanent magnet (10) is generated between the first pole shoe (4) and the second pole shoe (7),
- wherein the permanent magnet (10) separates the first pole shoe (4) of the base element (11) and the second pole shoe (7) of the base element (11) from one another, wherein the first pole shoe (4) has a first region with magnetically soft properties and the magnetic permeability index of µᵣ > 2 and the second pole shoe (7) has a second region with magnetically soft properties and the magnetic permeability index of µᵣ > 2,
- wherein at least the second base element which comprises the further first pole shoe (63), the further second pole shoe (65) and the further permanent magnet (64) is fastened to the secondary section (3), wherein the further first pole shoe (63) extends along the second pole shoe (7) from the first end (8) of the second pole shoe (7) to the second end (9) of the second pole shoe (7), wherein the further permanent magnet (64) has the magnetisation running from the further second pole shoe (65) to the further first pole shoe (63).

11. Machine tool, comprising an electric machine (1) according to one of claims 1 to 8.

12. Method for producing a base element (11) for an electric machine (1) according to one of claims 1 to 8, wherein the permanent magnet (10) is generated between the first pole shoe (4) and the second pole shoe (7), wherein generating the permanent magnet (10) between the first and the second pole shoe (4, 7) is restricted to the base element (11), wherein the permanent magnet (10) separates the first pole shoe (4) of the base element (11) and the second pole shoe (7) of the base element (11) from one another, wherein the first pole shoe (4) has the first region with magnetically soft properties and the magnetic permeability index of µᵣ > 2 and the second pole shoe (7) has the second region with magnetically soft properties and the magnetic permeability index of µᵣ > 2.

13. Method for producing a secondary section (3) for an electric machine (1) according to one of claims 1 to 8, wherein the base element (11) is fastened to the secondary section (3) as a unit and at least the second base element is fastened to the secondary section (3) as a unit, wherein the permanent magnet (10) is generated between the first pole shoe (4) and the second pole shoe (7), wherein the permanent magnet (10) separates the first pole shoe (4) of the base element (11) and the second pole shoe (7) of the base element (11) from one another, wherein the first pole shoe (4) has the first region with magnetically soft properties and the magnetic permeability index of µᵣ > 2 and the second pole shoe (7) has the second region with magnetically soft properties and the magnetic permeability index of µᵣ > 2, wherein the further first pole shoe (63) of the second base element extends along the second pole shoe (7) of the base element (11) from the first end (8) of the second pole shoe (7) to the second end (9) of the second pole shoe (7), wherein the further permanent magnet (64) has the magnetisation running from the further second pole shoe (65) to the further first pole shoe (63).

14. Use of a magnetically active material (14) for an electric machine (1) according to one of claims 1 to 8,
wherein the electric machine (1) comprises
- the primary section (2),
- the secondary section (3) that interacts with the primary section (2) by way of an air gap (12) during operation of the electric machine (1),
- the first pole shoe (4), which has the first end (5) and the second end (6), wherein the second end (6) of the first pole shoe (4) faces the air gap (12),
- the second pole shoe (7), which has the first end (8) and the second end (9), wherein the second end (9) faces the air gap (12),
- the permanent magnet (10), which has magnetisation running from the first pole shoe (4) to the second pole shoe (7),
- wherein the base element (11), which comprises the first pole shoe (4), the second pole shoe (7) and the permanent magnet (10), is fastened to the secondary section (3),
- wherein the permanent magnet (10) is disposed between the first pole shoe (4) and the second pole shoe (7),
- wherein the permanent magnet (10) has a matrix (13), in which the magnetically active material (14) is embedded,
- wherein the permanent magnet (10) is generated between the first pole shoe (4) and the second pole shoe (7),
wherein the permanent magnet (10) separates the first pole shoe (4) of the base element (11) and the second pole shoe (7) of the base element (11) from one another, wherein the first pole shoe (4) has a first region with magnetically soft properties and the magnetic permeability index of µᵣ > 2 and the second pole shoe (7) has a second region with magnetically soft properties and the magnetic permeability index of µᵣ > 2, wherein at least the second base element which comprises the further first pole shoe (63), the further second pole shoe (65) and the further permanent magnet (64) is fastened to the secondary section (3), wherein the further first pole shoe (63) extends along the second pole shoe (7) from the first end (8) of the second pole shoe (7) to the second end (9) of the second pole shoe (7), wherein the further permanent magnet (64) has the magnetisation running from the further second pole shoe (65) to the further first pole shoe (63).

## Revendications

1. Machine (1) électrique comprenant
- une partie (2) primaire,
- une partie (3) secondaire qui, lorsque la machine (1) électrique fonctionne, coopère avec la partie (2) primaire par l'intermédiaire d'un entrefer (12),
- un premier épanouissement (4) polaire, qui a une première extrémité (5) et une deuxième extrémité (6), la deuxième extrémité (6) du premier épanouissement (4) polaire étant tourné vers l'entrefer (12),
- un deuxième épanouissement (7) polaire, qui a une première extrémité (8) et une deuxième extrémité (9), la deuxième extrémité (9) étant tournée vers l'entrefer (12),
- un aimant (10) permanent, qui a une aimantation allant du premier épanouissement (4) polaire au deuxième épanouissement (7) polaire,
- dans laquelle un élément (11) de base, constitué du premier épanouissement (4) polaire, du deuxième épanouissement (7) polaire et de l'aimant (10) permanent, est fixé à la partie (3) secondaire,
- dans laquelle l'aimant (10) permanent est disposé entre le premier épanouissement (4) polaire et le deuxième épanouissement (7) polaire,
- dans laquelle l'aimant (10) permanent a une matrice (13), dans laquelle une substance (14) active magnétiquement est incorporée,
- dans laquelle l'aimant (10) permanent est produit entre le premier épanouissement (4) polaire et le deuxième épanouissement (7) polaire,
dans laquelle l'aimant (10) permanent sépare le premier épanouissement (4) polaire de l'élément (11) de base et le deuxième épanouissement (7) polaire de l'élément (11) de base l'un de l'autre, le premier épanouissement (4) polaire ayant une première partie à propriété à magnétisme doux et une perméabilité relative magnétique µr > 2 et le deuxième épanouissement (7) polaire ayant une deuxième partie à propriété à magnétisme doux et une perméabilité relative magnétique µr > 2, au moins un deuxième élément de base, constitué d'un autre premier épanouissement (63) polaire, d'un autre deuxième épanouissement (65) polaire et d'un autre aimant (64) permanent, étant fixé à la partie (3) secondaire, l'autre premier épanouissement (63) polaire s'étendant le long du deuxième épanouissement (7) polaire de la première extrémité (8) du deuxième épanouissement polaire à la deuxième extrémité (9) du deuxième épanouissement (7) polaire, l'autre aimant (64) permanent ayant une aimantation allant de l'autre deuxième épanouissement (65) polaire à l'autre premier épanouissement (63) polaire.

2. Machine (1) électrique suivant la revendication 1,
dans laquelle la proportion dans l'espace de la substance (14) active magnétiquement est plus grande que la proportion dans l'espace de la matrice (13).

3. Machine (1) électrique suivant la revendication 1 ou 2, dans laquelle la substance (14) active magnétiquement comprend des grains (41), qui ont une couche (43) d'oxyde et une partie (42) active magnétiquement, la partie (42) active magnétiquement des grains (41) étant entourée, au moins en partie, de la couche (43) d'oxyde.

4. Machine (1) électrique suivant l'une des revendications précédentes,
dans laquelle l'aimant (10) permanent a une première surface (16) de contact avec le premier épanouissement (4) polaire et l'aimant (10) permanent a une deuxième surface (17) de contact avec le deuxième épanouissement (7) polaire.

5. Machine (1) électrique suivant l'une des revendications précédentes,
dans laquelle le premier épanouissement (4) polaire est relié à l'aimant (10) permanent par un premier moyen (18, 19, 24) de liaison.

6. Machine (1) électrique suivant l'une des revendications précédentes,
dans laquelle les premiers épanouissements (4, 63) polaires et les deuxièmes épanouissements (7, 65) polaires s'étendent, en des points (36) directement voisins de leurs deuxièmes extrémités (9), plus loin dans l'entrefer (12), qu'en les points de leurs deuxièmes extrémités (9), qui sont plus près des aimants (10, 64) permanents, par le fait que les surfaces, tournées vers l'entrefer (12), des deuxièmes extrémités (9), sont incurvées entre les deux points (36, 38).

7. Machine (1) électrique suivant l'une des revendications précédentes,
- dans laquelle la partie (3) secondaire a un support (50), qui a une forme de base cylindrique,
- dans laquelle l'élément (11) de base est fixé au support (50),
- dans laquelle une normale (51) à une surface (52) latérale de la forme de base cylindrique s'étend de la première extrémité (5) du premier épanouissement (4) polaire à la deuxième extrémité (6) du premier épanouissement (4) polaire.

8. Machine (1) électrique suivant l'une des revendications précédentes,
dans laquelle la machine (1) électrique est un moteur-couple.

9. Elément (11) de base pour une machine (1) électrique suivant l'une des revendications précédentes,
- dans lequel l'élément (11) de base est constitué du premier épanouissement (4) polaire, du deuxième épanouissement (7) polaire et de l'aimant (10) permanent,
- dans lequel l'aimant (10) permanent est disposé entre le premier épanouissement (4) polaire et le deuxième épanouissement (7) polaire,
- dans lequel l'aimant (10) permanent a la matrice (13) dans laquelle la substance (14) active magnétiquement est incorporée,
- dans lequel l'aimant (10) permanent est produit entre le premier épanouissement (4) polaire et le deuxième épanouissement (7) polaire,
- dans lequel l'aimant (10) permanent sépare le premier épanouissement (4) polaire de l'élément (11) de base et le deuxième épanouissement (7) polaire de l'élément (11) de base l'un de l'autre, le premier épanouissement (4) polaire ayant une première partie à propriété à magnétisme doux et à la perméabilité relative magnétique µr > 2 et le deuxième épanouissement (7) polaire une deuxième partie à propriété à magnétisme doux et à la perméabilité relative magnétique µr > 2,
- dans lequel, lors d'une fixation de l'élément (11) de base et d'au moins un deuxième élément de base à une partie secondaire, l'autre premier épanouissement (63) polaire du deuxième élément de base peut s'étendre le long du deuxième épanouissement (7) polaire de la première extrémité (8) du deuxième épanouissement (7) polaire à la deuxième extrémité (9) du deuxième épanouissement (7) polaire, le deuxième élément de base comprenant l'autre premier épanouissement (63) polaire, l'autre deuxième épanouissement (65) polaire et l'autre aimant (64) permanent, qui a l'aimantation allant de l'autre deuxième épanouissement (65) polaire à l'autre premier épanouissement (63) polaire.

10. Partie (3) secondaire pour une machine (1) électrique suivant l'une des revendications 1 à 8,
- dans laquelle la partie secondaire a l'élément (11) de base,
dans laquelle l'élément (11) de base est constitué du premier épanouissement (4) polaire, du deuxième épanouissement (7) polaire et de l'aimant (10) permanent,
- dans laquelle l'aimant (10) permanent est disposé entre le premier épanouissement (4) polaire et le deuxième épanouissement (7) polaire,
- dans laquelle l'aimant (10) permanent a la matrice (13) dans laquelle la substance (14) active magnétiquement est incorporée,
- dans laquelle l'aimant (10) permanent est produit entre le premier épanouissement (4) polaire et le deuxième épanouissement (7) polaire,
- dans laquelle l'aimant (10) permanent sépare l'un de l'autre le premier épanouissement (4) polaire de l'aimant (11) de base et le deuxième épanouissement (7) polaire de l'élément (11) de base, le premier épanouissement (4) polaire ayant une première partie à propriété à magnétisme doux et à la perméabilité relative magnétique µr > 2, et le deuxième épanouissement (7) polaire une deuxième partie à propriété à magnétisme doux et à la perméabilité relative magnétique µr > 2,
- dans laquelle au moins le deuxième élément de base, qui comprend l'autre premier épanouissement (63) polaire, l'autre deuxième épanouissement (65) polaire et l'autre aimant (64) permanent, est fixé à la partie (3) secondaire, l'autre premier épanouissement (63) polaire s'étendant le long du deuxième épanouissement (7) polaire de la première extrémité (8) du deuxième épanouissement (7) polaire à la deuxième extrémité (9) du deuxième épanouissement (7) polaire, l'autre aimant (64) permanent ayant l'aimantation allant de l'autre deuxième épanouissement (65) polaire à l'autre premier épanouissement (63) polaire.

11. Machine-outil comprenant une machine (1) électrique suivant l'une des revendications 1 à 8.

12. Procédé de fabrication d'un élément (11) de base pour une machine (1) électrique suivant l'une des revendications 1 à 8, dans lequel on produit l'aimant (10) permanent entre le premier épanouissement (4) polaire et le deuxième épanouissement (7) polaire, la production de l'aimant (10) permanent, entre le premier et le deuxième épanouissements (4,7) polaires, étant limitée à l'élément (11) de base, l'aimant (10) permanent séparant l'un de l'autre le premier épanouissement (4) polaire de l'élément (11) de base et le deuxième épanouissement (7) polaire de l'élément (11) de base, le premier épanouissement (4) polaire ayant la première partie à propriété à magnétisme doux et à la perméabilité relative magnétique µr > 2, et le deuxième épanouissement (7) polaire la deuxième partie à propriété à magnétisme doux et à la perméabilité relative magnétique µr > 2.

13. Procédé de fabrication d'une partie (3) secondaire pour une machine (1) électrique suivant les revendications 1 à 8, dans lequel on fixe l'élément (11) de base, sous la forme d'une unité, à la partie (3) secondaire et on fixe au moins le deuxième élément de base en tant qu'une unité à la partie (3) secondaire, l'aimant (10) permanent étant produit entre le premier épanouissement (4) polaire et le deuxième épanouissement (7) polaire, l'aimant (10) permanent séparant l'un de l'autre le premier épanouissement (4) polaire de l'élément (11) de base et le deuxième épanouissement (7) polaire de l'élément (11) de base, le premier épanouissement (4) polaire ayant la première partie à propriété à magnétisme doux et à la perméabilité relative magnétique µr > 2, l'autre premier épanouissement (63) polaire du deuxième élément de base s'étendant le long du deuxième épanouissement (7) polaire de l'élément (11) de base, de la première extrémité (8) du deuxième épanouissement (7) polaire à la deuxième extrémité (9) du deuxième épanouissement (9) polaire, l'autre aimant (64) permanent ayant l'aimantation allant de l'autre deuxième épanouissement (65) polaire à l'autre premier épanouissement (63) polaire.

14. Utilisation d'une substance (14) active magnétiquement pour une machine (1) électrique suivant l'une des revendications 1 à 8,
la machine (1) électrique ayant
- la partie (2) primaire,
- la partie (3) secondaire qui, en fonctionnement de la machine (1) électrique, coopère avec la partie (2) primaire par un entrefer (12),
- le premier épanouissement (4) polaire, qui a la première extrémité (5) et la deuxième extrémité (6), la deuxième extrémité (6) du premier épanouissement (4) polaire étant tournée vers l'entrefer (12),
- le deuxième épanouissement (7) polaire, qui a la première extrémité (8) et la deuxième extrémité (9), la deuxième extrémité (9) étant tournée vers l'entrefer (12),
- l'aimant (10) permanent, qui a l'aimantation allant du premier épanouissement (4) polaire au deuxième épanouissement (7) polaire,
- dans laquelle l'élément (11) de base, constitué du premier épanouissement (4) polaire, du deuxième épanouissement (7) polaire et de l'aimant (10) permanent, est fixé à la partie (3) secondaire,
- dans laquelle l'aimant (10) permanent est disposé entre le premier épanouissement (4) polaire et le deuxième épanouissement (7) polaire,
- dans laquelle l'aimant (10) permanent a une matrice (13) dans laquelle de la substance (14) active magnétiquement est incorporée,
- dans laquelle l'aimant (10) permanent est produit entre le premier épanouissement (4) polaire et le deuxième épanouissement (7) polaire,
dans laquelle l'aimant (10) permanent sépare le premier épanouissement (4) polaire de l'élément (11) de base et le deuxième épanouissement (7) polaire de l'élément (11) de base l'un de l'autre, le premier épanouissement (4) polaire ayant une première partie à propriété à magnétisme doux et une perméabilité relative magnétique µr > 2 et le deuxième épanouissement (7) polaire ayant une deuxième partie à propriété à magnétisme doux et une perméabilité relative magnétique µr > 2,
dans laquelle au moins le deuxième élément de base constitué de l'autre premier épanouissement (63) polaire, de l'autre deuxième épanouissement (65) polaire et de l'autre aimant (64) permanent, est fixé à la partie (3) secondaire, l'autre premier épanouissement (63) polaire s'étendant le long du deuxième épanouissement (7) polaire de la première extrémité (8) du deuxième épanouissement polaire à la deuxième extrémité (9) du deuxième épanouissement (7) polaire, l'autre aimant (64) permanent ayant une aimantation allant de l'autre deuxième épanouissement (65) polaire à l'autre premier épanouissement (63) polaire.
